(19) Europäisches Patentamt
European Patent Office
Office européen des brevets

(11) **EP 2 070 725 B1**

(12) **FASCICULE DE BREVET EUROPEEN**

(45) Date de publication et mention
de la délivrance du brevet:
**16.06.2010 Bulletin 2010/24**

(51) Int Cl.:
**B60B 27/02** *(2006.01)* **B62K 25/02** *(2006.01)*
**F16B 31/02** *(2006.01)*

(21) Numéro de dépôt: **08021023.0**

(22) Date de dépôt: **04.12.2008**

(54) **Système de serrage rapide pour cycle avec contrôle du couple de serrage**

Schnellspannsystem für Rad mit Kontrolle des Spannmoments

Quick-clamping system for a cycle with clamping torque control

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **10.12.2007 FR 0708577**

(43) Date de publication de la demande:
**17.06.2009 Bulletin 2009/25**

(73) Titulaire: **SALOMON S.A.S.
74370 Metz-Tessy (FR)**

(72) Inventeurs:
• **Mercat, Jean-Pierre
74650 Chavanod (FR)**
• **Veux, Jean-Luc
74150 Rumilly (FR)**
• **Normand, Joseph
73230 Saint Alban Leysse (FR)**

(56) Documents cités:
**EP-A- 0 486 002 EP-A- 0 582 728
US-A- 3 948 141 US-A1- 2007 145 814**

EP 2 070 725 B1

## Description

La présente invention se rapporte à un système de serrage rapide, en particulier pour cycle. L'invention se rapporte aussi à un dispositif complet de serrage rapide aussi appelé communément « axe de blocage rapide » et à une roue comprenant un tel dispositif.

Dans le domaine du cycle, il est connu d'utiliser des dispositifs de serrage rapide pour monter rapidement un composant sur une partie de cycle, comme par exemple, une roue sur une fourche. Ces dispositifs dispensent de l'utilisation d'outils spécifiques tels que clés ou autres. Les dispositifs de serrage rapide peuvent s'utiliser aussi bien sur une roue avant que sur une roue arrière de vélo. Le dispositif d'attache peut aussi servir à sécuriser divers composants sur un cycle comme, par exemple, une selle à un tube de cadre.

Il existe différents systèmes de serrage rapide utilisés communément. La famille de dispositifs la plus répandue concerne celle à levier agissant sur une came pour exercer une force de serrage qui est fonction de la géométrie de la came et du préréglage manuel de l'entre-axe. En particulier, le dispositif comprend un axe appelé communément « tirant » comprenant à une première extrémité, une butée mobile ou fixe telle qu'un écrou de serrage et/ou une came, et à son autre extrémité, un système de serrage rapide comprenant un levier monté selon un axe perpendiculaire à l'axe du tirant, un écrou de réglage et une came intermédiaire. Différents modes de réalisation existent. Dans certains cas, la came fait partie intégrante du levier. Dans d'autres cas, il peut s'agir d'une pièce séparée.

Dans tous les cas de ces dispositifs, la force de serrage est obtenue en entrainant la came par basculement du levier d'une position d'ouverture à une position repliée en direction du tirant. Préalablement à la fermeture du levier, il est usuel de régler la force de serrage par vissage du système de serrage sur le tirant. Le vissage se fait par l'intermédiaire d'un écrou appartenant au système; lequel détermine l'entre-axe entre les deux surfaces de serrage du dispositif, de chaque coté du tirant.

Ces dispositifs posent un certain nombre de problèmes. En premier lieu, ces dispositifs ne permettent pas une bonne maitrise de l'effort de serrage. L'effort serrage peut varier de manière importante en fonction du réglage de l'entre-axe par l'utilisateur au moyen de l'écrou de réglage du système de serrage. Un entre-axe réglé trop long au départ peut provoquer un serrage insuffisant et donc un problème de sécurité éventuel. Le tirant joue le rôle d'un ressort en traction et l'élasticité de celui-ci lui permet de supporter les efforts de traction. Un entre-axe réglé trop court, au contraire, peut provoquer un effort de traction axial trop important sur le tirant et donc un risque de rupture du tirant ou de casse d'un autre élément du dispositif. Un effort de traction trop important induit aussi des efforts de compression sur les roulements du moyeu. Il en résulte un tassement possible des roulements et, par conséquent, l'endommagement de ceux-ci ainsi que l'apparition de frottements importants dans le moyeu. De plus, la manipulation de ce type de dispositif n'est pas pratique et oblige l'utilisateur à des tâtonnements dans le réglage de l'entre-axe pour obtenir le bon serrage.

La valeur de la force de serrage n'est donc jamais identique et dépend du préréglage de l'entre-axe par l'écrou et donc, en grande partie aussi, de la force de l'utilisateur. Les variations des valeurs de serrage peuvent être importantes; d'où des risques de desserrage en cas de serrage insuffisant ou au contraire de rupture du tirant, en cas de serrage trop important. Afin de garantir la résistance du tirant pour des couples très élevés, le tirant est généralement réalisé dans un matériau à résistance élevée et est surdimensionné par rapport à un usage correspondant à des efforts normaux. A résistance équivalente, il peut être constitué d'un matériau plus léger comme le titane de façon à économiser du poids notamment pour les vélos de compétition. Le surdimensionnement des pièces et/ou l'utilisation de matériaux légers comme le titane est bien entendu coûteux.

Un autre problème de ce type de dispositif provient de la difficulté à obtenir, à la fois, une orientation correcte du levier en fin de serrage et, à la fois, la bonne force de serrage. Il est en effet préférable d'orienter le levier de façon qu'il ne puisse pas former un « crochet » pour des éléments extérieurs (branchage, banderole, fil, etc.) lors de la pratique pouvant provoquer le desserrage de la roue ou des accrochages et, par conséquent, un danger potentiel de chute.

La demande de brevet US 2007/0154286 concerne un dispositif de blocage rapide offrant une utilisation facilitée. Il comprend un levier actionnable en rotation et configuré pour serrer un écrou interne contre le tirant. Le levier est mobile axialement à l'encontre de la force d'un moyen de mise sous tension élastique pour pouvoir être manuellement désengagé de l'écrou et pouvoir prendre une position angulaire qui peut être choisie indépendamment de l'état de serrage de l'écrou. L'avantage principal est ainsi de pouvoir faciliter l'action de serrage par un repositionnement du levier et/ou rendre possible l'orientation finale du levier sans desserrage du dispositif. Toutefois, ce dispositif n'améliore pas la maitrise de l'effort de serrage. Tous les problèmes évoqués en relation avec le manque de contrôle de cet effort sont donc maintenus par ce dispositif. Par exemple, le serrage du dispositif reste soumis à l'appréciation de l'utilisateur et reste dépendant de la force physique de celui-ci.

Le brevet US 5, 447,362 est aussi basé sur un système d'amplification du serrage par un mécanisme à levier. L'amélioration consiste à prévoir un système de visualisation du serrage en amplifiant le déplacement d'un indicateur de serrage en forme de tube. Toutefois, un tel dispositif, s'il donne une indication sur la valeur de serrage, ne résout pas entièrement les problèmes liés au serrage exagéré ou insuffisant du dispositif.

Le document US-A-2007/145814 concerne un système de sevrage rapide comportant les caractéristiques du préambule de la revendication 1.

Il existe donc un besoin pour proposer une solution pour un dispositif de serrage rapide qui résout les problèmes de l'art antérieur.

En particulier, il existe un besoin pour améliorer la maitrise et le contrôle de l'effort de serrage pour l'utilisateur sans que cet effort soit directement fonction de la force physique de l'utilisateur. En particulier, il existe un besoin pour appliquer une amplification de serrage qui soit bien maitrisable et reproductible.

Il existe aussi un besoin pour procurer une indication du serrage correct à l'utilisateur qui soit une indication facilement perceptible.

Il existe aussi un besoin pour globalement éliminer la possibilité d'appliquer un effort de traction exagéré sur le tirant du dispositif pouvant créer un endommagement des pièces et/ou un besoin de surdimensionnement ou d'emploi de matériaux chers et aux caractéristiques mécaniques exceptionnelles. Il existe aussi un besoin pour gagner du poids sur le dispositif.

Il existe aussi un besoin pour améliorer le rendement au serrage d'un dispositif de serrage.

Il existe également un besoin pour empêcher, ou rendre peu probable le desserrage intempestif du dispositif de serrage pour des raisons évidentes de sécurité de l'utilisateur.

Il existe aussi un besoin de permettre un repositionnement facile du levier du dispositif et indépendant de l'effort de serrage exercé par le dispositif.

L'objectif de l'invention est atteint par la fourniture d'un système de serrage rapide pour dispositif de serrage rapide, en particulier pour cycle, du type comprenant un tirant s'étendant dans une direction axiale et un élément d'appui terminal monté sur une première extrémité de l'axe destiné à prendre appui sur une première surface de serrage d'un cycle ; ledit système de serrage rapide comprenant un sous-ensemble de serrage (SES) comprenant une surface d'appui et un sous-assemblage d'actionnement (SEA) comprenant un moyen d'actionnement mobile, apte en rotation axiale autour dudit tirant et configuré pour transmettre un couple de serrage au sous-ensemble de serrage (SES) lors du serrage du dispositif, et comprenant des moyens de limitation du couple de serrage permettant de limiter le couple transmis par le sous-ensemble d'actionnement (SEA) au sous-ensemble de serrage (SES) et

les moyens de limitation du couple de serrage forment une interface de connexion débrayable qui limite le couple transmis par le sous-ensemble d'actionnement (SEA) au sous-ensemble de serrage à partir d'une valeur limite du couple ou d'une plage de couples de serrage prédéfini. Des moyens de montage du système sur le tirant du dispositif sont prévus, comprenant une portion filetée du sous-ensemble de serrage configurée pour s'engager au vissage sur l'extrémité du tirant. L'interface de connexion débrayable est formée par un engagement de deux portions de frottement, lesquelles peuvent comprendre des portions, en contact l'une de l'autre qui se désengagent à partir d'une valeur limite du couple ou d'une plage de couples de serrage prédéfinie. Les deux portions de frottement se désengagent à l'encontre d'un moyen de mise sous tension élastique qui applique un effort élastique du sous-ensemble d'actionnement (SEA) contre le sous-ensemble de serrage (SES). Un moyen de réglage de la précontrainte du moyen de mise sous tension élastique peut être est prévu.

L'objectif de l'invention est également atteint par la fourniture d'un système de serrage rapide pour dispositif de serrage rapide, en particulier pour cycle, du type comprenant un tirant s'étendant dans une direction axiale et un élément d'appui terminal monté sur une première extrémité de l'axe destiné à prendre appui sur une première surface de serrage d'un cycle ; ledit système de serrage rapide comprenant un sous-ensemble de serrage (SES) comprenant une surface d'appui et un sous-assemblage d'actionnement (SEA) comprenant un moyen d'actionnement mobile, apte en rotation axiale autour dudit tirant et configuré pour transmettre un couple de serrage au sous-ensemble de serrage (SES) lors du serrage du dispositif, et comprenant en outre une interface de différentiel des frottements entre les modes de serrage et de desserrage configurée pour favoriser le glissement entre un moyen d'appui et des moyens de serrage dans le sens du serrage et la génération de frottement entre ledit moyen d'appui et lesdits moyens de serrage dans le sens du desserrage. Ladite interface comprend un moyen de roue libre et peut comprendre, au moins, des moyens de retenue sélectif comprenant une bague roue libre de glissement comprenant des bords de retenue coopérant avec un crantage, des moyens de serrage, ladite bague de roue libre comprenant des ailettes radiales avec des bords relevés et ladite interface comprenant en plus une rondelle configurée pour promouvoir le glissement entre la bague roue libre et les moyens de serrage.

L'objectif de l'invention est également atteint par la fourniture d'un système de serrage rapide pour dispositif de serrage rapide, en particulier pour cycle, du type comprenant un tirant s'étendant dans une direction axiale et un élément d'appui terminal monté sur une première extrémité de l'axe destiné à prendre appui sur une première surface de serrage d'un cycle ; ledit système de serrage rapide comprenant un sous-ensemble de serrage (SES) comprenant une surface d'appui et un sous-assemblage d'actionnement (SEA) comprenant un moyen d'actionnement mobile, apte en rotation axiale autour dudit tirant et configuré pour transmettre un couple de serrage au sous-ensemble de serrage (SES) lors du serrage du dispositif, ledit sous-ensemble de serrage comprenant un arbre muni d'un alésage fileté apte à être engagé sur la partie filetée du tirant et en ce que la partie filetée du tirant et celle de l'alésage possèdent un grand pas., par exemple supérieur à 1,5 mm pour un diamètre de 5 mm. Pour augmenter la résistance, on peut prévoir que la partie fileté comprend plusieurs filets.

L'objectif de l'invention est également atteint par la fourniture d'un dispositif de serrage en particulier pour cycle, du type comprenant un tirant s'étendant dans une direction axiale et un élément d'appui terminal monté sur une première extrémité de l'axe destiné à prendre appui sur une première surface de serrage d'un cycle ; ledit système de serrage rapide comprenant un sous-ensemble de serrage (SES) comprenant une surface d'appui et un sous-assemblage d'actionnement (SEA) comprenant un moyen d'actionnement mobile, apte en rotation axiale autour dudit tirant et configuré pour transmettre un couple de serrage au sous-ensemble de serrage (SES) lors du serrage du dispositif, des moyens de reprise des efforts de torsion étant ménagés sur ledit tirant à proximité desdits sous-assemblages d'actionnement.

Dans un mode de réalisation de l'invention, ces moyens de reprise des efforts de torsion comprennent une portion dudit tirant qui a une section polygonale.

L'objectif de l'invention est également atteint par la fourniture d'une roue de bicyclette qui comprend un moyeu, une jante, des moyens reliant la jante au moyeu (rayons, bâton, disque....), ledit moyeu comportant un tunnel prévu pour le passage du tirant du dispositif de serrage rapide, l'ouverture dudit tunnel ayant une section de forme hexagonale, ou plus généralement polygonale.

Pour cela, certains modes de réalisation de l'invention, l'invention est essentiellement basée sur l'intégration d'un système de limitation du couple de serrage transmis par les moyens d'actionnement aux surfaces de serrage du dispositif.

Dans son principe, le système de limitation de couple fonctionne de telle sorte que lorsque la valeur de couple ou plage de couples de serrage est atteinte et que le serrage optimal est donc réalisé contre les surfaces de serrage, le couple transmis atteint alors une valeur limite inférieure à la valeur nécessaire pour augmenter l'effort de serrage sur lesdites surfaces.

Cette valeur limite de couple atteint peut être obtenue par un débrayage mécanique ou physique du système.

Le système peut ainsi fonctionner sur la base d'un mode débrayable du dispositif qui est fonction de la valeur du couple exercé par le levier ou encore d'une plage de valeur de couples prédéfinies.

Le phénomène de débrayage peut être basé sur des moyens de connexion entre deux surfaces de frottement maintenues en contact de manière élastique et qui se désolidarisent à partir d'un certain seuil de couple atteint. Par exemple, les deux surfaces de contact peuvent former un mécanisme d'engrenage de deux parties du système maintenues en contact par un moyen élastique et qui se désengagent partiellement entre elles par déformation du moyen élastique ou encore par déformation d'une au moins des deux parties.

Le système de l'invention peut aussi comprendre des moyens de réglage de la valeur limite/plage de couples dans laquelle/lesquelles le débrayage a lieu.

Lors du débrayage du système, le mouvement relatif de frottement entre les moyens de connexion peuvent créer un bruit de frottement ou de cliquetis formant une indication sonore qui procure une indication de la valeur de serrage optimale atteinte par le système.

De manière plus particulière, l'invention se rapporte à un système de serrage rapide pour un dispositif de serrage rapide, en particulier pour cycle, comprenant un axe s'étendant dans une direction axiale et un élément d'appui terminal monté sur une première extrémité de l'axe destiné à prendre appui sur une première surface de serrage d'un cycle ; ledit système de serrage rapide comprenant des moyens pour le montage sur une seconde extrémité de l'axe ; ledit système comprenant un sous-ensemble de serrage (SES) comprenant une surface d'appui et un sous-assemblage d'actionnement (SEA) comprenant un moyen d'actionnement mobile en rotation axiale autour dudit axe apte à transmettre un couple de serrage au sous-ensemble de serrage lors du serrage du dispositif,

caractérisé en ce qu'il comprend des moyens de limitation du couple de serrage permettant de limiter le couple transmis par le sous-ensemble d'actionnement au sous-ensemble de serrage.

Plus précisément, le système de limitation du couple de serrage forme une interface de connexion débrayable qui limite le couple transmis par le sous-ensemble d'actionnement au sous-ensemble de serrage à partir d'une valeur limite maximale du couple ou d'une plage de couples de serrage prédéfinie. L'interface de connexion est ainsi débrayée à partir d'une certaine course en rotation du moyen d'actionnement et le débrayage se poursuit en cas de poursuite de la rotation du levier dans la direction de serrage. Après débrayage, le couple transmis par le sous ensemble d'actionnement atteint une valeur maximale ou une valeur inférieure à la valeur maximale du couple de serrage atteinte avant le débrayage de sorte que l'effort de serrage atteint lui-même une valeur maximale d'effort de serrage.

Le moyen d'actionnement peut être un levier ou tout autre type de moyens mécaniques appropriés permettant de transmettre un couple. Par exemple, il peut aussi s'agir d'une molette.

Dans un mode possible, l'interface de connexion débrayable est formée par un engagement de deux portions de frottement en contact l'une sur l'autre qui se désengagent au moins partiellement à partir d'une valeur limite du couple ou d'une plage de couples de serrage prédéfinie. Lors du désengagement au moins partiel des portions de frottement, le couple transmis n'augmente plus mais atteint une valeur maximale aux forces de frottement prêt.

Selon une caractéristique de l'invention, les moyens de montage du système sur l'axe du dispositif comprennent une portion de vis du sous-ensemble de serrage configurée pour s'engager au vissage sur l'extrémité de l'axe transversal.

Selon une autre caractéristique de l'invention, les deux portions de frottement se désengagent à l'encontre d'un moyen de mise sous tension élastique. Selon le moyen de mise sous tension élastique employé, la force axiale et la course pour l'opération de débrayage entre les surfaces de contact peuvent être maitrisées. Par exemple, le moyen de mise sous tension élastique peut être un ressort du type rondelle Belleville ou hélicoïdal ou encore un bloc élastomère. Par exemple, plusieurs rondelles Belleville peuvent être employées de façon à augmenter la précision de la course de débrayage et donc la précision de l'effort de serrage transmis.

Dans un mode possible, le moyen élastique peut être une partie élastique d'une au moins des portions de frottement. Par exemple, l'une au moins de la partie élastique pourrait être formée dans une matière plastique durable ayant de bonnes caractéristiques d'élasticité.

Selon une caractéristique complémentaire, le dispositif comprend un moyen de réglage de la précontrainte du moyen de mise sous tension élastique. Un tel moyen peut être, par exemple, au moins une bague de réglage et/ou un contre-écrou et/ou au moins une cale interchangeable. Cette bague et/ou cale interchangeable peut être disposée entre les moyens de mise sous tension élastique et une partie du moyen d'actionnement comme, par exemple, le corps du levier. L'avantage d'un moyen de réglage réside dans la possibilité de régler l'effort de serrage. Il faut noter que ce réglage peut être prévu au moment du montage du dispositif, par exemple, lors de la fabrication. Selon une autre possibilité, il peut être réglé par l'utilisateur lui-même.

Selon un aspect de l'invention, les deux portions de contact de l'interface de connexion débrayable peuvent être des portions dentées qui s'engagent mutuellement. L'engagement entre les portions dentées peut s'étendre dans une direction axiale ou radiale par rapport à la direction de serrage selon différents modes de construction possibles. L'avantage de portions dentées résulte dans une meilleure fiabilité et un meilleur contrôle du débrayage. Aussi, lors du débrayage, les portions dentées frottent l'une contre l'autre et provoquent un indicateur sonore du débrayage et par conséquent une indication de l'atteinte du seuil de serrage final.

Dans un premier mode de construction de l'invention, le moyen de mise sous tension élastique est configuré pour appliquer un effort axial du sous-ensemble d'actionnement contre le sous-ensemble de serrage de façon à ce que l'interface de connexion débrayable se désengage essentiellement par un déplacement axial et angulaire relatif entre les portions de contact du sous-ensemble d'actionnement et à l'encontre de la tension du moyen de mise sous tension élastique.

Selon une caractéristique possible, l'une au moins des portions dentées possède un profil de dent dissymétrique configuré pour opposer une plus grande résistance au débrayage dans le sens de rotation du levier procurant le desserrage plutôt que dans le sens de rotation du levier procurant le serrage du sous-ensemble de serrage. Une telle configuration permet d'assurer le déblocage du dispositif sans risque de débrayage dans le sens du desserrage notamment en cas de grippage du dispositif. Dans un mode possible, les portions dentées possèdent un profil de dents symétrique.

Par exemple, le moyen de mise sous tension élastique peut être formé par au moins une rondelle Belleville. Le moyen peut comprendre plusieurs rondelles Belleville montées en série. L'avantage de ce moyen élastique particulier est qu'il est d'un faible encombrement et est adapté à des faibles déplacements en contrepartie d'efforts élastiques importants.

Selon une caractéristique de l'invention, la portion dentée motrice de l'interface de connexion débrayable est formée par un rochet comprenant une couronne dentée.

Dans un mode possible, le moyen de mise sous tension élastique est positionné dans une cavité entre le moyen d'actionnement et le rochet.

Une vis de réglage de la tension du moyen de mise sous tension élastique peut être prévue de façon à pouvoir régler la précontrainte du moyen élastique. Le moyen de mise sous tension élastique peut être positionné dans une cavité entre une vis de réglage et un épaulement du moyen d'actionnement. Dans ce cas, le rochet peut être solidaire en rotation du moyen d'actionnement. On peut envisager un corps de moyen d'actionnement et un rochet qui sont faits d'une seule pièce comme, par exemple, une pièce intégralement obtenue par usinage ou par moulage-injection.

Par exemple, le rochet est rendu solidaire en rotation du moyen d'actionnement par une portion radiale de cannelures qui s'engage dans une portion cylindrique du corps du moyen d'actionnement comprenant des cannelures internes de forme complémentaire aux cannelures du rochet.

Selon un autre mode possible de l'invention, l'interface de connexion débrayable est formée par au moins un cliquet agissant sur au moins une portion dentée. L'avantage d'un principe de « cliquet » provient de la possibilité de facilité l'opération de serrage, au moins, par effet de pompage. Autrement dit, pour obtenir le serrage, le levier peut être actionné selon une course angulaire restreinte dans la direction du serrage et peut être actionné en arrière afin de reprendre le serrage, dans la position angulaire initiale, sans desserrer le dispositif. Ainsi, le serrage peut être effectué plus rapidement et sans devoir faire plusieurs tours au levier.

Selon une caractéristique plus précise, le cliquet ou la portion dentée possède un profil de dent asymétrique configuré pour procurer l'« effet de pompage » au moins dans la position de serrage.

Selon une autre caractéristique, le cliquet s'engage sur au moins une portion dentée du sous-ensemble de serrage sous l'effet élastique d'un moyen de mise sous tension. Différents moyens élastiques peuvent être utilisés comme un ressort à fil, à lame ou encore un ressort à compression tel qu'un ressort hélicoïdal ou un bloc élastomère. Les caractéristiques du ressort (course, raideur) déterminent, en principe, les conditions de débrayage du cliquet par rapport à la portion dentée. Bien entendu, d'autres caractéristiques interviennent dans les conditions de débrayage comme la géométrie des dents et les matériaux constitutifs des pièces en contact.

Dans un mode de réalisation de l'invention, la portion dentée possède une forme de révolution telle qu'une roue. Toutefois, il est possible d'envisager un système de serrage rapide dans lequel la portion dentée prend une forme qui n'est pas une forme de révolution mais une forme incurvée ou linéaire telle qu'une crémaillère.

Selon un premier mode de réalisation, le cliquet est mobile en basculement contre la portion dentée. Par exemple, le cliquet est monté selon au moins un axe transversal de rotation.

Dans un mode de réalisation plus précis, le cliquet peut former avec le moyen élastique de mise sous tension une genouillère pour le passage entre une position stable de serrage et une position stable de desserrage. Un tel passage impose à l'utilisateur de forcer la genouillère dans l'une ou l'autre position avec le passage du point dur. Un avantage est ainsi d'avoir un système simple, fiable et offrant une certaine sécurité pour le passage du mode de serrage au mode de desserrage et inversement.

Selon ce mode possible, le cliquet comprend deux portions de cliquet opposées configurées pour s'engager alternativement avec au moins une roue dentée. Pour des raisons économiques et de facilité de réalisation technique, les deux portions de cliquet peuvent être formées d'une seule pièce. Toutefois, on peut envisager deux portions formant deux cliquets séparés. Dans une configuration, chaque portion de cliquet s'engage alors avec la même roue dentée. En particulier, les cliquets s'engagent sur la roue dans des positions opposées à environ 180 degrés ou inférieures à 180 degrés.

Dans une alternative possible, chaque portion de cliquet s'engage avec une roue dentée distincte. Un avantage peut être de pouvoir gérer la géométrie de la denture plus finement en mode de serrage et en mode de desserrage pour régler le débrayage au serrage.

Dans un autre mode possible, le cliquet peut être mobile axialement dans un logement du corps du système de serrage rapide. De plus, le cliquet est verrouillable par un moyen de verrouillage en mode de desserrage de sorte que le desserrage se fait de manière intentionnelle uniquement et faisant tourner le levier sur plusieurs tours autour de l'axe du tirant.

Selon un autre aspect inventif du système selon l'invention, le système de serrage rapide comprend une interface de différentiel des frottements entre les modes de serrage et de desserrage configurée pour favoriser le glissement entre un moyen d'appui et des moyens de serrage dans le sens du serrage et la génération de frottements entre ledit moyen d'appui et lesdits moyens de serrage dans le sens du desserrage. Une telle interface montée sur le système permet d'assurer un meilleur rendement des efforts de serrage et une meilleure sécurité afin de réduire le risque de desserrage non-intentionnel.

En particulier, cette interface peut comprendre au moins des moyens de retenue sélectifs. Un tel moyen peut, par exemple, comprendre une bague roue libre de glissement comprenant des bords de retenue coopérant avec un crantage des moyens de serrage. Les moyens de serrage peuvent être, dans l'exemple de l'invention, un arbre de serrage comprenant un filetage destiné à être vissé sur l'extrémité du tirant. D'autres moyens de serrage sont toutefois envisageables. Le moyen d'appui peut être, toujours dans le contexte de l'invention, une rondelle d'appui montée en rotation par rapport audit arbre. Une telle rondelle comprend, comme connu en soi, une surface de serrage munie d'un crantage et destinée à s'engager au serrage contre une surface d'un cycle à serrer, comme par exemple, la surface d'appui d'une extrémité d'un bras de fourche.

La bague intermédiaire peut, par exemple, comprendre des ailettes radiales munie de bords relevés. L'interface peut aussi comprendre en plus une rondelle configurée pour promouvoir le glissement entre la bague roue libre et les moyens de serrage. De préférence, la rondelle, comprend au moins une couche de glissement fait dans un matériau à plus faible coefficient de frottement par rapport au matériau de la bague roue libre. Le matériau de la rondelle comprend au moins une couche de glissement en PTFE chargé. De préférence encore, la rondelle possède un diamètre externe inférieur au diamètre de la bague roue libre pour réduire le couple de serrage. Dans une alternative possible, l'interface comprend une seule bague roue libre comprenant une surface de glissement pour générer un glissement dans le sens du serrage et une surface de frottement pour générer un frottement dans le sens du desserrage.

Le système selon l'invention peut être monté sur tout type de dispositif de serrage rapide appelé communément : « axe de blocage rapide ». L'invention se rapporte aussi à un dispositif ou axe de blocage rapide muni d'un tel système de serrage ; ledit dispositif comprenant un axe ou tirant s'étendant dans une direction axiale, un élément d'appui terminal monté sur une première extrémité du tirant et ledit système de l'invention monté sur la deuxième extrémité du tirant.

Selon un avantage de l'invention, un gain de poids peut être obtenu par un tirant fabriqué dans un matériau de relativement faible densité et de résistance mécanique suffisante en tenant compte des valeurs d'effort qu'il doit supporter dans le cadre du dispositif de l'invention. Pour cela, le tirant peut posséder une résistance mécanique à la traction inférieure aux tirants traditionnels du fait que l'on maîtrise mieux les valeurs des efforts de serrage sans atteindre des valeurs trop élevées. Pour cela, le matériau du tirant peut être un alliage à base d'aluminium possédant une résistance mécanique, Rm comprise entre 450 et 950 Mpa et une densité comprise en 2.6 et 2.9. Le tirant peut être fait dans un alliage d'aluminium et de zinc dont les caractéristiques mécaniques de résistance sont de l'ordre de 500 MPa ou 700 MPa. Un alliage, tel que le titane, de l'ordre de 1000 Mpa possède une moins bonne usinabilité et est très cher comparé aux alliages à plus basse valeur de résistance mécanique. Des tirants en matériaux composite à base de fibres en carbone ou autres ou en association avec un alliage métallique peuvent aussi être utilisés. Enfin on peut concevoir l'utilisation de tirants en acier à haute résistance, par exemple, avec un Rm de l'ordre de 1400 Mpa, en diminuant le diamètre afin d'abaisser le poids du dispositif. Un alliage de magnésium de Rm d'environ 340 Mpa et de densité 1.8 peut aussi être envisagé.

Selon un autre mode de réalisation de l'invention, des moyens de reprise des efforts de torsion sont disposés entre le dispositif de serrage rapide et le moyeu. Ces moyens de reprise des efforts de torsion peuvent consister en une complémentarité de forme entre une portion du tirant et du moyeu.

Selon une caractéristique possible de l'invention, le tirant possède une forme générale cylindrique interrompue par une portion polygonale ayant pour fonction de reprendre les efforts de torsion avec le moyeu. Cette portion polygonale peut être relativement courte, de l'ordre de 2 à 20% de la longueur du tirant. Elle peut être disposée à proximité du système de blocage rapide de façon à libérer la portion du tirant opposée à la portion du côté du système de blocage des efforts de torsion. La portion cylindrique disposée du côté opposé au système de blocage rapide peut avoir un diamètre inférieur au diamètre de la partie cylindrique placée du côté du système de blocage du fait que cette portion cylindrique de plus faible diamètre ne supporte pas les efforts de traction.

L'invention se rapporte aussi à une roue comprenant un tel dispositif. En particulier, l'invention se rapporte à une roue comprenant une jante, un moyeu, des moyens de raccordement de la jante au moyeu, par exemple des nappes de rayons et/ou des voiles pleins, et au moins un dispositif ou axe de blocage rapide muni du système de serrage rapide selon l'invention ; ledit dispositif comprenant un tirant passant par l'axe du moyeu.

L'invention sera mieux comprise et d'autres avantages ressortiront de la description détaillée des figures qui suivent.

La figure 1 montre une vue générale d'une roue d'un cycle comprenant le dispositif de serrage rapide selon l'invention.

La figure 2 est une vue en plan d'un dispositif de serrage rapide complet selon un premier mode de l'invention.

La figure 3 est une vue en coupe d'une partie du dispositif, plus précisément du système de serrage rapide du dispositif de la figure 2 en mode embrayé (serrage/desserrage).

La figure 4 est une vue en coupe du système de serrage en mode débrayé (fin de serrage).

La figure 5 est une vue éclatée du système de la figure 4.

La figure 5a est une vue en coupe partielle du premier mode de réalisation de l'invention.

La figure 5b est une vue en coupe partielle d'une dent du rochet selon le premier mode de réalisation de l'invention.

La figure 6 est une vue schématique de l'interface de connexion du système en mode embrayé (serrage/desserrage).

La figure 7 est une vue schématique de l'interface de connexion du système en mode débrayé (fin de serrage).

La figure 8 est une vue en coupe du système de serrage rapide du dispositif selon un second mode de réalisation en mode embrayé.

La figure 9 est une vue en coupe du mode de la figure 8 mais en mode débrayé.

La figure 10 est une vue éclatée du système de serrage rapide du dispositif selon un troisième mode de réalisation en mode embrayé.

La figure 11 montre un élément du système de la figure 10.

La figure 12 est une vue partielle en perspective éclatée du système de la figure 10 (en particulier, sans le rochet et le corps du moyen d'actionnement).

La figure 13 est une vue en perspective d'un système de serrage selon un quatrième mode de réalisation.

La figure 14 est une vue en plan, selon A-A, du système de la figure 13 en position de serrage.

La figure 15 est une vue en coupe, selon A-A, du système de la figure 13 en position de débrayage lors du serrage.

La figure 16 est une vue en coupe selon A-A de la figure 13 en position de desserrage.

La figure 17 est une vue en coupe selon A-A de la figure 13 en position de roue libre au desserrage.

La figure 18 est une vue en perspective d'un système de serrage rapide selon un cinquième mode de réalisation.

La figure 19 est une vue en coupe, selon B-B, du mode de la figure 18.

La figure 20 est une vue en perspective éclatée du mode de la figure 18.

La figure 21 est une vue partielle du tirant et de l'écrou

La figure 22 est une coupe de la figure 21.

La figure 23 est une vue en perspective visualisant partiellement la roue et le blocage.

La figure 24 est une vue en coupe partielle du mode de réalisation décrit à la figure 23.

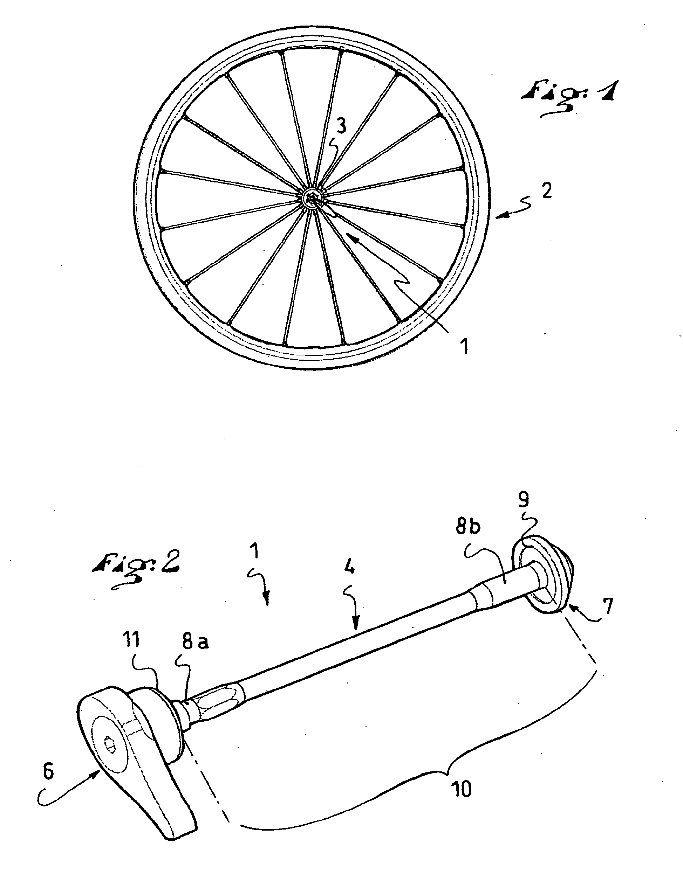

En référence aux figures 1 et 2, le dispositif de serrage rapide 1 en position desserrée est monté sur une roue de vélo 2 au travers d'un moyeu central 3 faisant partie de la roue. Le dispositif traverse le moyeu axialement de part en part par un axe 4 appelé « tirant » apte à recevoir chaque bras de fourche (non représenté) lequel comprend une lumière ouverte destinée à prendre appui sur la portion d'axe libre. Une fois chaque bras de fourche engagé sur une portion d'extrémité libre du tirant, un système de serrage 6 placé à l'une des extrémités du tirant est actionné au serrage afin d'exercer un effort de traction sur le tirant de façon à réaliser le serrage du dispositif contre les deux bras de fourche et ainsi immobiliser la roue par rapport à la fourche.

Un dispositif de serrage 1 selon un premier mode de réalisation est montré au complet à la figure 2. Il comprend un système de serrage 6, selon l'invention, monté sur une première extrémité 8a du tirant 4 et capable d'appliquer une force de traction sur le tirant 4 quand le dispositif est en opération sur le cycle. Il comprend un élément d'appui terminal 7 monté sur l'autre extrémité du tirant. Cet élément d'appui terminal est, dans le cas représenté, une tête rapportée et fixe par coincement ou collage ou encore monobloc par rapport au tirant, ou encore une pièce montée par un écrou comprenant un filetage et une surface de serrage transversale 9 disposée sur une seconde extrémité 8b du tirant. La position relative de l'élément d'appui peut ainsi être réglée par rapport à l'extrémité du tirant afin d'affiner le réglage de l'entre-axe 10 du tirant. Du coté opposé, le système de serrage 6 possède une portion de filetage et une surface de serrage transversale 11 permettant le réglage de l'entre-axe. L'entre-axe est ici défini comme la distance séparant les deux surfaces de serrage transversales 9, 11. Comme connu en soi, le dispositif comprend aussi deux portions de ressort hélicoïdal (non représentés) de chaque coté du tirant au contact des surfaces de serrage transversales dont la fonction est d'aider au centrage du dispositif lors du montage sur le cycle. Bien entendu, d'autres systèmes de centrage peuvent être utilisés.

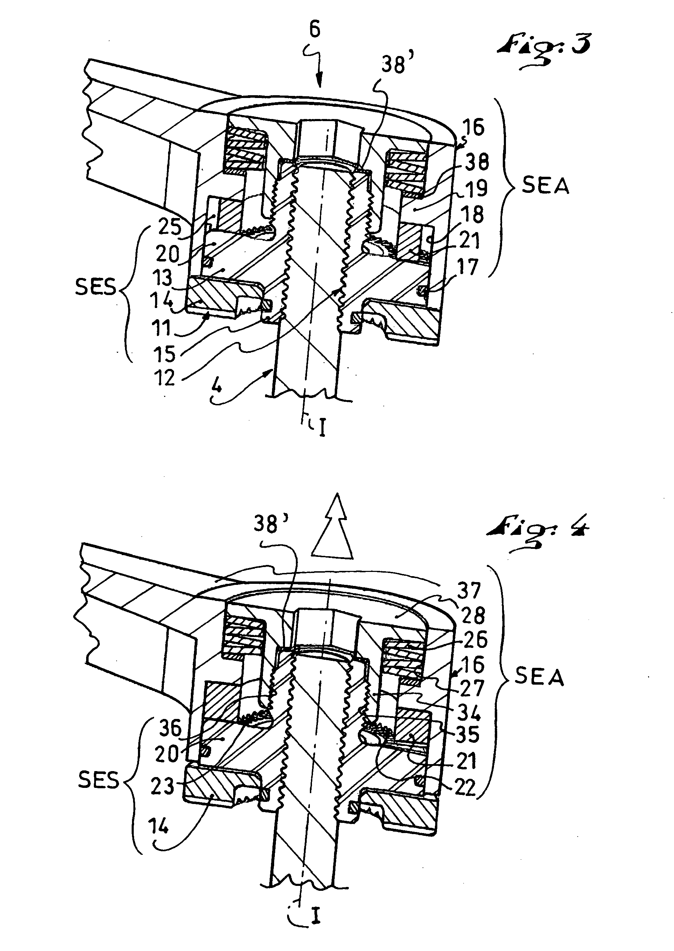

Les figures 3 à 7 montrent un premier mode de réalisation de l'invention en particulier, de l'une des parties du dispositif, à savoir ; le système de serrage rapide 6 monté sur l'une des extrémités filetées 12 du tirant. Le système 6 se compose selon l'invention d'un sous-ensemble de serrage SES et d'un sous ensemble d'actionnement SEA lesquels sont reliés par une interface de connexion débrayable comme il sera expliqué en détail plus loin.

Le sous-ensemble de serrage comprend un arbre central 13 muni d'un alésage central fileté qui s'étend autour de l'axe de rotation longitudinal I passant par la ligne axiale du tirant 4. L'arbre central 13 est ainsi apte à être engagé au vissage sur la partie filetée 12 du tirant. Une rondelle d'appui 14 est montée autour d'un prolongement 15 de l'arbre central formant une portion tubulaire La rondelle est montée libre en rotation autour de l'arbre central de façon à favoriser le serrage et le desserrage en réduisant les frottements entre l'arbre mobile et la rondelle et favoriser l'accroche de la rondelle sur la partie réceptrice du cycle. L'extrémité externe de la rondelle 14 forme la surface de serrage 11 proprement dite du sous-ensemble de serrage (SES). La surface 11 peut être munie de rugosités, d'un crantage ou encore d'une épaisseur de matière déformable afin de promouvoir l'accroche de la rondelle sur la surface de réception du cycle, par exemple, un bras de fourche.

Le sous-ensemble d'actionnement (SEA) comprend, quant à lui, un corps cylindrique 16 monté de manière coaxiale selon la direction d'axe I dans lequel se loge au moins partiellement l'arbre central 13. L'arbre 13 est ainsi monté à l'intérieur du corps avec possibilité de glisser dans la direction axiale I relativement au corps lors de l'opération de serrage comme il sera expliqué plus loin. Un moyen d'étanchéité tel qu'un joint torique 17 peut être interposé entre les surfaces de contact de l'arbre et la surface interne du corps 16 de manière à empêcher l'intrusion de particules tel que du sable ou des graviers pouvant affecter le bon fonctionnement du dispositif.

Le corps comprend, par ailleurs, un premier logement 18 délimité par un épaulement annulaire 19 et par la base 20 en forme de disque de l'arbre central. Dans ce logement 18 est logé un moyen de débrayage sous forme d'un rochet 21. Ce moyen prend la forme d'une portion annulaire comprenant une face inférieure munie d'une série de dents 22 distribuée selon motif en « couronne ». Les dents sont ainsi orientées en direction de la surface supérieure de la base 20 de l'arbre ; laquelle possède, complémentairement, une série de dents 23 distribuées aussi en « couronne » et orientées en direction du rochet 21.

Ainsi, l'assemblage denté du rochet et de la paroi supérieure de la base 20 de l'arbre forme une interface de connexion dite « débrayable » selon l'invention dont le mode de fonctionnement sera explicité plus loin.

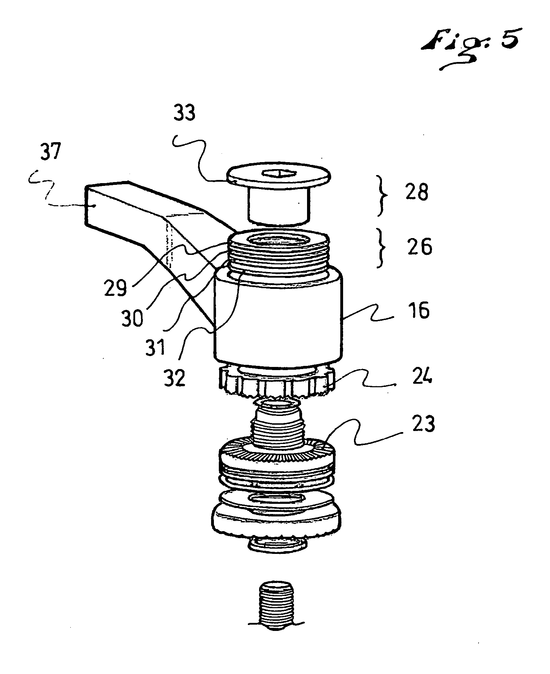

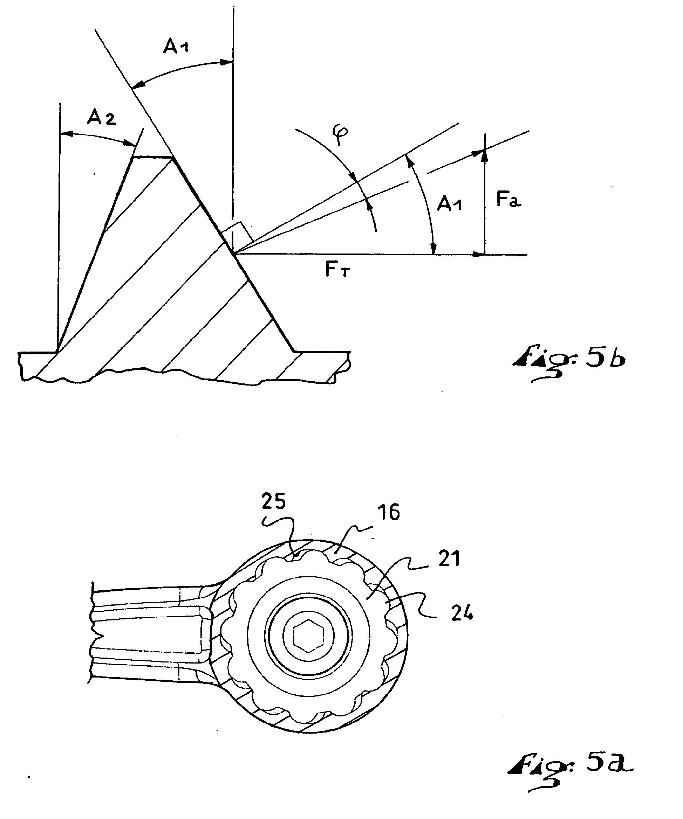

Comme le montre la figure 5, le rochet possède une surface périphérique formant une série de cannelures 24 qui engage aussi complémentairement une série de cannelures internes 25 produite sur la surface interne cylindrique du corps 16. L'assemblage de cannelures procure une liaison assurant une solidarisation au moins partielle dans la direction de rotation. Autrement-dit, le rochet est en partie solidaire, aux jeux fonctionnels prêts, du corps et est empêché en rotation relative par rapport au corps. Toutefois comme cela est visible à la figure 5a, un jeu peut être prévu entre les cannelures internes 25 du corps cylindrique 16 et les cannelures 24 du rochet 21 de façon à prévoir un battement angulaire possible permettant un certain repositionnement dans une position angulaire choisie du levier. Par exemple, les cannelures femelles du corps peuvent former des portions cylindriques dont le diamètre est plus large que les cannelures males du rochet formées aussi de portions cylindriques. Ainsi, après chaque passage de dent, en, raison de ce jeu entre les cannelures males/femelles, il est possible de repositionner le levier d'un certain écart angulaire, par exemple, dans une plage de l'ordre de 2 à 5 degrés.

Le système comprend aussi un moyen de mise sous tension élastique 26 qui est, par exemple comme il est illustré dans le premier mode, logé dans un second logement 27 du sous-ensemble d'actionnement. Le logement est délimité par l'épaulement annulaire 19 et un élément de tarage 28. Le moyen de mise sous tension élastique 26 peut être de différente configuration. Selon un mode de l'invention, il peut s'agir d'au moins une rondelle Belleville, de préférence, plusieurs rondelles Belleville 29, 30, 31, 32 montées en série. L'avantage d'un moyen élastique comprenant des rondelles Belleville est qu'il permet un réglage précis de la course de déplacement relatif de l'interface de connexion débrayable ; par conséquent, un réglage précis du couple de serrage. Bien entendu, d'autres moyens de mise sous tension élastique sont possibles comme, par exemple, un bloc en élastomère ou un ressort hélicoïdal. Le moyen élastique pourrait aussi faire partie du rochet en étant une partie élastique intégrante du rochet et/ou faire partie du corps en faisant partie intégrante du corps.

La compression du moyen de mise sous tension élastique, par exemple, des rondelles 29-32, peut être réalisé par le moyen de réglage 28 sous forme d'une bague ou écrou taraudé. Cette bague est montée au travers du corps 16 et comprend un épaulement 33 qui prend appui en compression des rondelles 29-32. La bague comprend une portion centrale 34 alésée munie d'un filetage 35 qui coopère avec un filetage 36 de l'arbre central. Ainsi, la compression du moyen élastique peut être réglée en modifiant par vissage le degré d'introduction de la bague relativement à l'arbre central. Un tel réglage peut être fait, par exemple, au moment du montage du système. L'arrêt en position peut être fait par une rondelle ajustable qui bloque le système, par exemple une cale 38' ou un empilage de cales.

Le sous-ensemble d'actionnement (SEA) comprend aussi un levier 37 afin de pouvoir actionner le système en rotation lors du serrage et lors du desserrage. Le levier peut faire partie intégrante du corps cylindrique 16 ou encore être une pièce rapportée. Il s'étend radialement par rapport au dispositif. Bien entendu, d'autres moyens d'actionnement sont possibles. Ainsi, on peut prévoir de remplacer le levier par un bouton ou une molette faisant partie du corps 16.

Enfin des moyens de calage peuvent être prévus afin de régler plus finement le couple de serrage transmis par le sous-ensemble d'actionnement au sous-ensemble de serrage. Par exemple, un jeu de cale(s) 38 peut être interposé dans le logement 27 ou encore entre le rochet 21 et l'épaulement 19. Le jeu de cale(s) peut être interchangeable au moment du montage du dispositif. Les cales 38' peuvent aussi être positionnées à différents endroits comme entre l'extrémité supérieure de la base 20 et l'écrou de réglage 28.

Le rochet 1 peut être d'une seule pièce avec le corps du levier ou peut être une pièce séparée. L'avantage de deux pièces séparées est que les matériaux de chaque pièce peuvent être choisis au mieux ; par exemple, un matériau léger en matière plastique pour le levier et un matériau résistant à l'usure, comme en métal, pour le rochet et assurer ainsi une bonne stabilité du couple.

Le fonctionnement du dispositif ainsi décrit est le suivant.

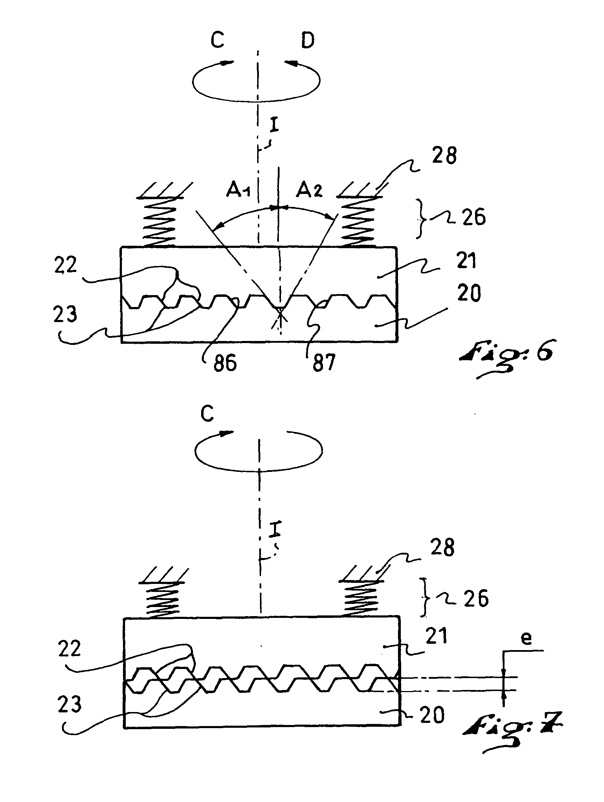

La figure 3 montre le système de serrage en prise avec le tirant dans un mode « embrayé » correspondant à la vue schématique de la figure 6; c'est-à-dire, dans lequel l'interface de connexion est configurée en contact mécanique intime pour transmettre le couple de serrage du levier 37 au sous-ensemble de serrage SES lequel est repris dans un effort axial de serrage appliqué par la rondelle d'appui 14. Dans cette configuration, le moyen de mise sous tension élastique 26 force le corps cylindrique 16 en compression contre le rochet 21 ; qui lui-même s'applique contre la base de l'arbre 20. Il en résulte un engagement des dents 22 du rochet et des dents de l'arbre 23. Au repos, le système se trouve dans cette configuration statique. Lorsque le couple de serrage est appliqué sur le levier 37 par l'utilisateur, le couple est transmis au rochet puisqu'il est solidaire en rotation du corps par l'assemblage de cannelures 24, 25. Ce couple est donc transmis à l'interface de connexion, c'est-à-dire à l'assemblage des dents 22, 23. Il en résulte que l'arbre central 13 se déplace en rotation contre la portion filetée du tirant 4 de sorte que l'entre-axe diminue ; ce qui crée le serrage par la surface de serrage contre la surface 11 à serrer du cycle.

La connexion est instable au-delà d'un certain seuil de couple ; ce qui produit un désengagement partiel des dents 22, 23; autrement-dit, un « débrayage » entraînant la limite de l'effort axial. Les figures 6 et 7 montrent clairement le passage de l'état embrayé à l'état débrayé selon l'invention. Lorsque le couple atteint une valeur seuil, l'engrenage de la connexion est sollicité en torsion créant ainsi un désengagement et un soulèvement du rochet et une compression du moyen élastique. Le rochet se soulève et revient en position à chaque passage de dent. L'effort de tarage et la raideur du moyen élastique détermine la valeur seuil (ou plage de valeurs) du couple qui provoque le débrayage par soulèvement du rochet suivi d'un retour en position après chaque passage de dent.

La forme et l'angle des dents déterminent aussi la valeur seuil du couple au débrayage. La configuration des dents peut être asymétrique. Plus particulièrement, dans le sens C du serrage, l'angle A1 de la surface frontale 86 des dents du rochet par rapport à l'axe I est plus grand que l'angle A2 de la surface arrière 87 des dents du rochet.

La figure 5b montre un profil de dent selon l'invention. La relation entre la force axiale « Fa » et l'angle A1 est déterminé par la relation suivante :

$$Fa = (C/Rmy) \times tg (A1 - \varphi)$$

Où C est le couple transmis,
Rmy est le rayon moyen des dents par rapport à l'axe I du dispositif et,
φ est l'angle de frottement du matériau.

La force tangentielle $F_T$ = C/Rmy est directement déterminée par le couple et le rayon moyen :

$$F_T = C/Rmy$$

Si l'angle A1 est trop faible, l'influence des frottements est importante et donc le couple de déclenchement devient trop sensible aux conditions de frottement (lubrification, grippage, ...). Si A1 est inférieur à l'angle de frottement φ, il ne se produit pas de débrayage et le système est bloqué. Si A1 est égal à 90 degrés, il ne se produit que du frottement, il faut donc un effort axial Fa très élevé et le déclenchement ou débrayage n'est pas précis.

Afin de rechercher le couple le plus stable possible, il est nécessaire de trouver une plage d'angle intermédiaire dans laquelle le couple à appliquer n'est pas trop influencé par les conditions de frottement, d'une part, et n'est pas bloqué, d'autre part.

Il faut noter que le matériau des dents doit être choisi de sorte que le coefficient de frottement reste aussi constant que possible dans le temps afin d'obtenir un couple aussi stable que possible.

De préférence, l'angle A1 est de l'ordre de 25 à 40 degrés, plus préférentiellement de l'ordre de 32 à 33 degrés. Les dents 23 de la base 20 sont préférablement complémentaires de la forme des dents du rochet. Du faite de la dissymétrie et notamment de l'angle de la surface frontale, plus celui-ci augmente, plus le débrayage intervient à une valeur de couple élevée et inversement. Si l'angle est trop élevé, le système est incapable de débrayer et le serrage est alors celui d'un système de serrage traditionnel qui dépend de la force physique de l'utilisateur. Le même phénomène peut se produire si la raideur du moyen élastique est réglée trop dure. De préférence, les dents ont une forme évolutive, en particulier une forme de came hélicoïdale, de préférence à pas constant. Autrement dit, la dent n'a pas un angle constant mais un angle évolutif en forme d'hélice formant des surfaces de contact plus importante entre les dents.

Ainsi, au delà d'un seuil du couple de serrage, le système débraye, de sorte que le levier et le corps qui sont solidaires entre eux entrainent le rochet en rotation. Le rochet se soulève par rapport à la surface dentée de l'arbre en créant un écart « e » (figure 7). Lorsque le levier poursuit sa rotation, la couronne dentée 22 du rochet 21 frotte contre la couronne dentée 23 de l'arbre 20 du sous-ensemble de serrage. Le frottement sur le passage des dents occasionné par le déplacement relatif en rotation du rochet par rapport à l'arbre procure une indication sonore utile à l'utilisateur qui est alors averti que le serrage optimal est obtenu. La position du levier peut être réglée à toute position angulaire choisie par l'utilisateur sans que l'effort de serrage n'en soit modifié pour autant. Ainsi, le repositionnement du levier peut se faire afin de réduire les risques d'accrochage en poursuivant la rotation du levier dans le sens du serrage jusqu'à la position finale choisie.

Dans le sens du desserrage, le levier est activé dans le sens inverse des aiguilles d'une montre (sens D). Dans ce sens, l'angle A2 des dents du rochet et de l'arbre est choisi plus petit que dans le sens du serrage de sorte que le déblocage peut avoir lieu à la valeur de serrage sans risque de débrayage. Un angle A2 compris entre environ 27 à 28 degrés apporte des résultats satisfaisants. Par exemple, une différence d'angle entre les deux faces de la dent est entre 0 et 7 degré, de préférence d'environ 5 degrés.

Pour la fabrication, l'asymétrie de la denture des couronnes dentées 22, 23 peut être obtenue par fraisage au moyen d'une fraise inclinée possédant des angles de fraisage d'environ 50-70 degrés. Pour le rochet et ses cannelures radiales peuvent être obtenus par frittage de poudre métallique ou moulage (cire perdue) ou encore par frappe. Le matériau du rochet peut être en métal comme en acier, aluminium ou Zamac® ou encore en plastique moulé.

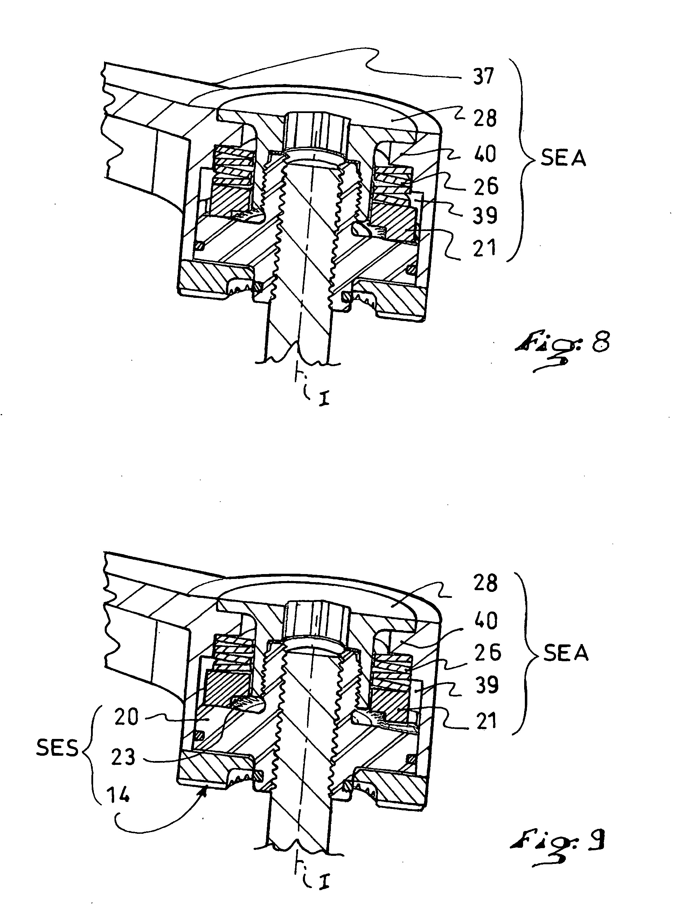

Les figures 8 et 9 montrent un second mode de réalisation de l'invention. Par rapport au mode précédent, les mêmes références sont utilisées pour désigner les mêmes pièces. La seule différence réside dans le sous-ensemble d'actionnement SEA et, plus précisément, dans la position du moyen de mise sous tension élastique 26 qui est situé dans un logement 39 délimité directement entre le rochet 21 et un épaulement 40 du corps du levier. Dans ce mode de réalisation, le rochet n'est pas directement solidaire du corps mais conserve sa mobilité axiale relativement au corps lui permettant le soulèvement lors du débrayage.

Les dents des moyens de débrayage peuvent être remplacées par d'autres moyens de frottement comme par exemple des billes, des perçages coniques ou encore des cylindres.

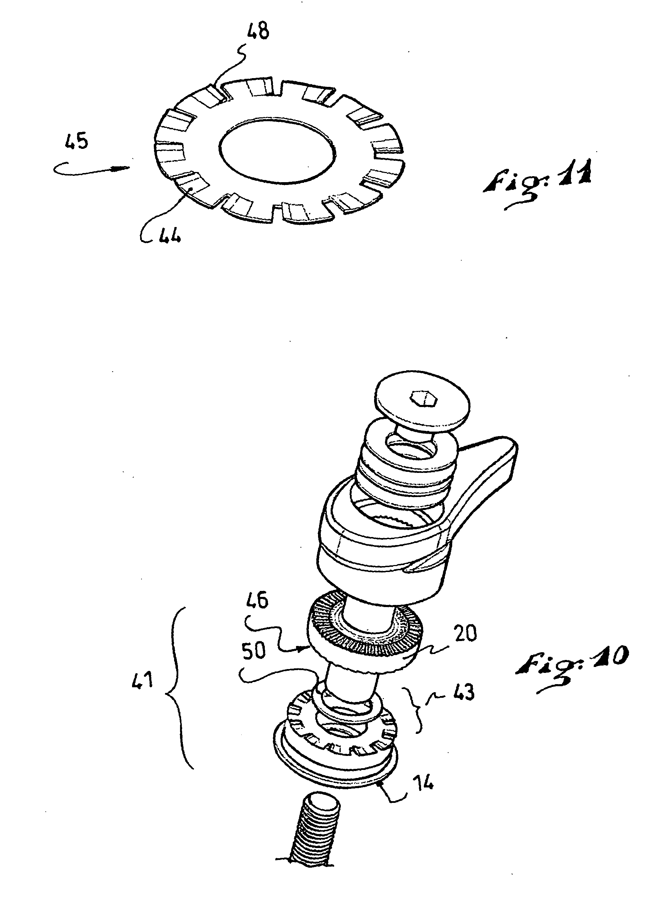

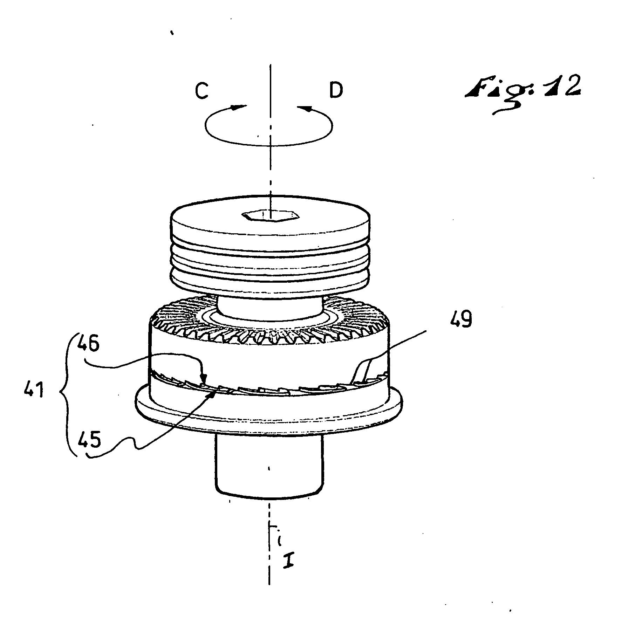

Les figures 10, 11 et 12 montrent un troisième mode de réalisation de l'invention. L'amélioration principale avec le premier mode provient de l'intégration d'une interface 41 de différentiel des frottements entre les modes de serragedesserrage.

En effet lorsque l'utilisateur serre le blocage, le couple qu'il exerce sur le levier se décompose en une fraction du couple, environ 50%, transféré de l'écrou à la rondelle d'appui et la fraction complémentaire , environ donc 50%, transféré dans le tirant par la liaison hélicoïdal vis/écrou, au desserrage l'utilisateur doit exercer un couple légèrement inférieur comparativement au serrage, ou l'on retrouve exactement le même couple au niveau de la rondelle d'appui et un couple inférieur au niveau de la liaison vis / écrou. On peut remarquer que le couple de frottement entre l'écrou et la rondelle d'appui est néfaste lors du serrage car elle réduit l'efficacité du serrage de l'utilisateur, elle a par contre un effet bénéfique au desserrage afin d'éviter que le blocage ne puisse se desserrer de lui même.

Afin d'améliorer l'efficacité du blocage tout en évitant un desserrage intempestif, le mécanisme fonctionne selon le principe que la fonction de serrage favorise le glissement entre l'écrou et la rondelle d'appui alors que la fonction de desserrage y génère des frottements. Il en résulte une augmentation du couple nécessaire au desserrage par rapport au couple nécessaire au serrage. Un bénéfice est d'assurer plus de sécurité dans le sens du desserrage et vise ainsi à respecter les normes en vigueur pour les dispositifs de blocage dans le domaine du cycle tout en améliorant l'efficacité du serrage.

Pour cela, l'interface 41 est une interface de « roue libre » ou de frottement unidirectionnelle comprenant des moyens de retenue 43 sélectif en fonction du sens de rotation du sous-ensemble d'actionnement. En particulier, les moyens de retenue sélectifs comprennent une série d'ailettes radiales 44 d'une bague roue libre de glissement 45 lesquelles coopèrent en retenue (dans le sens du desserrage) de la bague, avec un crantage 46 formé sur la surface inférieure du corps de l'arbre 20. Les ailettes possèdent des bords relevés 48 qui viennent en butée sur des dents 49 du crantage lorsque le corps est activé en direction D du desserrage par le levier. De ce fait, la bague roue libre 45 est entrainée en rotation. La mise en rotation de la bague 45 génère des frottements à l'interface entre la bague et la surface interne de la rondelle d'appui 14 du fait du mouvement relatif entre ces deux pièces.

Dans le sens de serrage « C », les dents 49 de l'arbre 20 passent les bords relevés et de ce fait le corps n'entraine pas la bague roue libre en rotation. La bague reste donc en place par rapport à la rondelle d'appui 14 lors du déplacement du corps du levier. Afin de limiter les frottements entre la base de l'arbre central 13 entrainée en rotation et la bague de glissement fixe, une rondelle de glissement 50 en matériau à faible coefficient de frottement doit être interposée entre l'arbre et la bague.

La rondelle 50 est, par exemple, de plus faible diamètre que la bague de glissement 45 afin de réduire au maximum les frottements. La rondelle est faite dans un matériau tel que du PTFE pur ou PTFE pouvant éventuellement contenir des charges. Bien entendu, la rondelle pourrait être omise dans l'interface. La rondelle d'interface 45 peut comprendre une face supérieure en matériau à bas coefficient de frottement et une couche inférieure en matériau à coefficient de frottement plus important comme un métal, par exemple de l'acier. Dans une alternative possible, la rondelle est remplacée par un vernis de glissement sur la surface de la bague roue libre.

A titre d'exemple numérique, la rondelle possède un diamètre extérieur de 11 mm et un diamètre intérieur de 9 mm soit un rayon moyen de 5 mm. Le couple de matériaux de la rondelle 50 et l'écrou 20 possède un coefficient de frottement « f » d'environ 0.05. La bague roue libre a un diamètre de 11 mm et un diamètre interne de 9 mm soit un rayon moyen « Rmy » de 6 mm. Le couple de matériaux entre la bague roue libre 45 et la bague de serrage 14 possède un coefficient de frottement de 0.14.

Pour une force axiale Fa de 6000 Newton, le couple induit entre l'écrou et la rondelle d'appui au serrage est obtenu par la formule :

$$C = Rmy.Fa.f$$

Par conséquent, dans le sens du serrage, le couple nécessaire au serrage est de l'ordre de Cs = 0.05x5x6000/1000 soit 1,5 Newton.m.

Dans le sens du desserrage, on emmène en rotation la bague roue libre et le couple nécessaire au desserrage est de l'ordre de C=0.14x6x6000/1000 soit 5 Newton.m.

On constate donc dans cet exemple numérique donné, que le couple entre l'écrou et la face d'appui nécessaire au desserrage est environ 3.4 fois plus important au desserrage que le couple nécessaire au serrage.

Selon un autre aspect de l'invention, le rendement au serrage peut être amélioré en prévoyant un filetage de vis du tirant avec un pas plus grand ; ceci afin d'augmenter l'avance lors du serrage. En effet, en étudiant les frottements d'une liaison vis / écrou on se rend compte que le rendement est assez faible et que par exemple, le fait de doubler le pas du filetage, permet de diviser par 2 l'angle nécessaire pour le serrage mais n'augmente que très faiblement le couple. Ainsi sur un filetage M5x0,8 utilisé usuellement sur les blocages rapides de cycle il faut un couple de 3N.m dans le filetage pour serrer un effort de 6000N, si l'on double le pas à 1,6 mm le couple augmente alors de 3 à 3,8 N.m soit +26% alors que la course angulaire a été divisée de moitié, ainsi l'énergie nécessaire pour serrer en doublant le pas a été réduite à (3,8 / 3) x( 1 / 2) = 63 % de la valeur initiale ce qui donne donc une amélioration de l'efficacité du serrage de 37%.

Il est à noter que ce type de filetage améliore l'efficacité au serrage mais a également pour effet de réduire le couple de desserrage et dégrade donc la sécurité du blocage vis à vis du dévissage, ce type de construction à filetage à grand pas doit être de préférence utilisé avec un système de frottement différentiel analogue à la description précédente.

Une autre amélioration pour augmenter l'efficacité de serrage consiste à réduire le coefficient de frottement à l'interface vis / écrou en traitant par exemple à l'aide d'un vernis de glissement le filet de la vis et/ou de l'écrou. Ainsi l'utilisation d'un vernis de glissement à base de PTFE sur le filetage M5x 1,6 (à double filet) cité ci dessus, permet de réduire le couple pour serrer un effort de 6000 N de 3,8 N.m (non traité) à 2,5 N.m (traité PTFE) soit -35% et à redescendre le couple à une valeur inférieur à un filetage standard de M5x0,8 qui nécessite 3 N.m (non traité).

Ainsi le meilleur mode de réalisation est de superposer ces 2 améliorations (grand pas et vernis de glissement) pour optimiser l'efficacité et d'y adjoindre le système de différentiel de frottement pour éviter tout risque de desserrage.

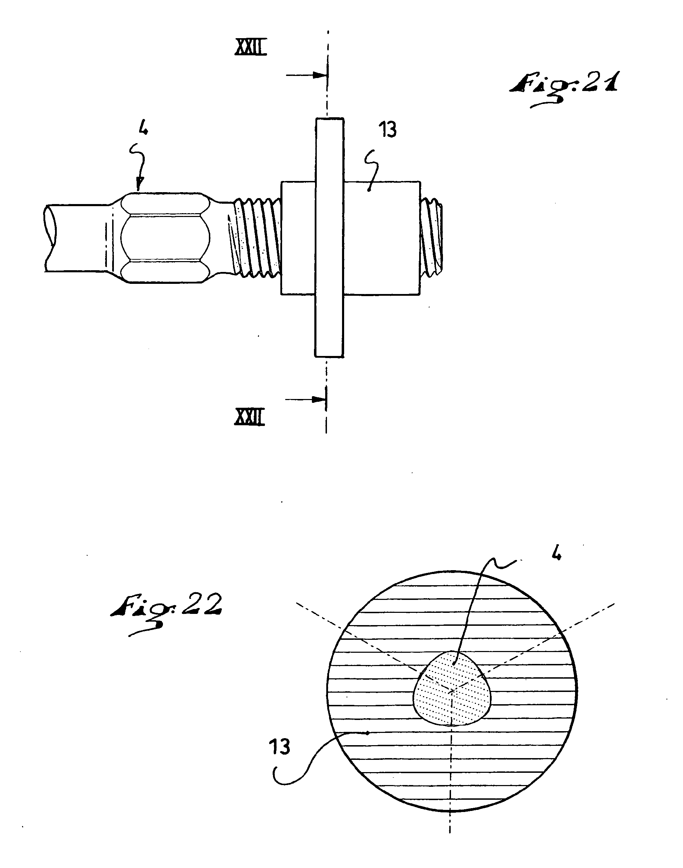

Les figures 21 et 22 décrivent un mode de réalisation alternatif dans lequel on a prévu un tirant 4 dont la partie filetée a un grand pas. Pour des raisons de simplicité de la description, seul le tirant 4 et l'arbre 13 ont été dessinés ici. Bien entendu cette variante pourra être implémentée dans tous les modes de réalisation de l'invention décrit dans cette demande. La partie filetée du tirant 4 ainsi que celle de l'arbre 13 sont du type M6 avec un pas de 2,1 mm, et comportent trois filets de profondeur de 0,7 mm. Une vis à grand pas assure ainsi un meilleur rendement. L'usage de plusieurs filets améliore en outre la résistance mécanique de la vis.

Dans ce cas de figure, un couple de déclenchement de 5 N.m suffit pour induire un effort de traction de 6000 N dans le tirant.

On notera que dans le cas de figure décrit aux figures 2 à 7, c'est-à-dire ne disposant pas de l'interface de différentiel de frottement, un couple de déclenchement de 8 N.m suffit pour s'assurer que la roue sera maintenue dans la fourche avec un effort de serrage de 6000 N.

Une telle interface à effet « roue libre » permet d'améliorer le rendement au serrage et garantit une sécurité pour éviter un desserrage intempestif en imposant un couple desserrage plus important au desserrage par rapport au couple de serrage. Il faut aussi noter qu'une telle interface peut s'appliquer à tout type de dispositif de serrage d'un axe pour cycle entre une rondelle d'appui et un organe de serrage et n'est pas limité au dispositif selon l'invention.

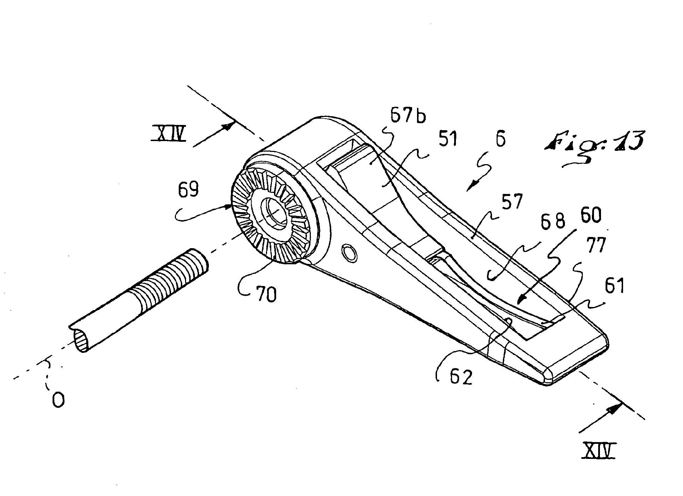

Un autre mode de réalisation de l'invention est illustré aux figures 13 à 17. Il s'agit dans ce mode d'un principe à cliquet permettant un serrage par effet de « pompage » et débrayage du cliquet à partir d'un certain seuil de couple de serrage atteint.

Le dispositif comprend un système de serrage 6 comprenant un corps 57 se prolongeant par un levier 77 ; lequel possède une lumière centrale 68 dans laquelle sont logés un cliquet double 51 et un moyen de mise sous tension élastique 60.

L'interface de connexion débrayable est ainsi formée par le cliquet double 51 à deux positions de stabilité formant avec le moyen élastique 60, une genouillère. Le cliquet est destiné à s'engager sur au moins une portion dentée 52, par exemple, une roue dentée, solidaire du sous-ensemble de serrage.

Le sous-ensemble de serrage comprend ainsi une roue dentée associée à une rondelle de serrage 69 comprenant un crantage 70 favorisant les frottements contre la portion de cycle à serrer (fourche, par exemple). La rondelle de serrage est montée en rotation libre par rapport à la roue dentée 52. Une autre rondelle interne (non représentée) en matériau à faible coefficient de frottement peut être disposée entre la rondelle 69 et la roue dentée afin d'améliorer le rendement au serrage.

La roue dentée 52 possède un alésage central 76 de forme cylindrique munie d'un filetage (non représenté) pour l'introduction et le vissage de l'extrémité du tirant.

Le cliquet double comprend une première portion de cliquet 53 et une seconde portion de cliquet 54 ; les deux portions étant opposées et formant une sorte de fourche. Chaque portion de cliquet comprend une dent 55, 56 de profil asymétrique qui est destinée à s'engager avec la portion dentée 52 dans le mode d'engagement. La roue dentée a, par exemple, un profil de dent symétrique, c'est-à-dire présentant le même angle dans le sens du serrage comme du desserrage.

Le cliquet double est ainsi monté en rotation sur le corps 57 du dispositif qui s'étend par le levier 77 par un premier point de rotation 58. Le cliquet double comprend une portion postérieure 59 se raccordant à un moyen élastique 60 tel qu'un fil ressort. Le fil ressort comprend deux bras de fils 61 62 reliés par un point de rotation 63 sur le cliquet double, d'une part, et par un point de rotation 64 à l'arrière du levier 77, d'autre part. Il résulte de cet assemblage la formation d'une genouillère formé par trois points de rotation 58, 63, 64 créant ainsi un cliquet à effet « bistable » avec deux positions de stabilités correspondant à chaque position d'engagement alternative de chaque portion de cliquet 53, 54 en opposition sur la roue dentée 52.

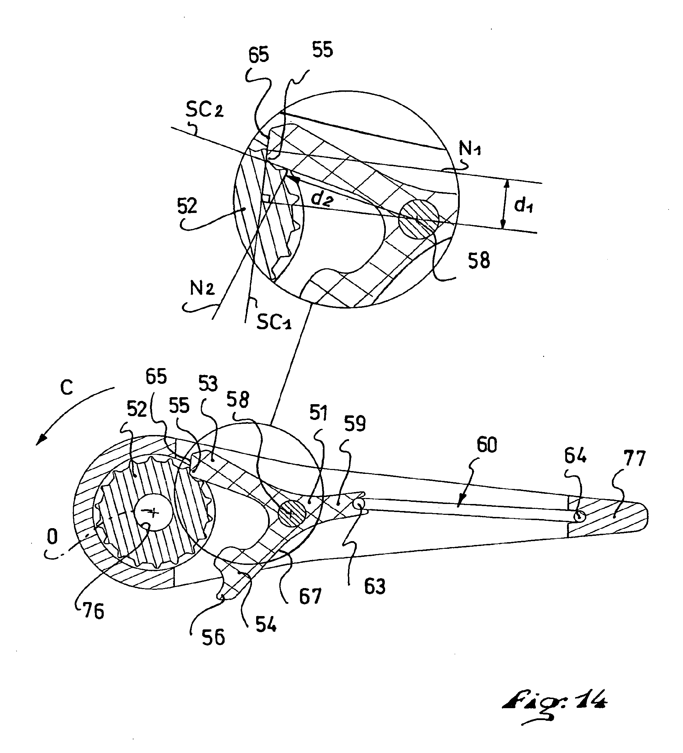

Il faut remarquer la configuration asymétrique des dents des portions des cliquets 53, 54 ainsi que la configuration symétrique des dents de la roue dentée 52 permettent de gérer l'effet cliquet aussi bien dans la position de serrage que dans la position de desserrage. Plus précisément, la figure 14 montre une première position de serrage du cliquet dans laquelle la première portion de cliquet 53 est engagée sur la roue dentée permettant ainsi de serrer le dispositif, par vissage du tirant dans la roue, lorsque le levier est actionné dans le sens de rotation C. La dent 55 de la portion de cliquet en engagement forme une surface frontale d'engagement 65.

Le système est débrayable à partir d'un certain couple de serrage. Dans ce cas, la portion de cliquet 51 se soulève au contact de la dent de la roue dentée sous l'effet de la contrainte exercée par le ressort.

Pour mettre le dispositif en position de serrage il faut préalablement presser sur la première portion de cliquet 53 pour s'assurer que le double cliquet 51 se trouve dans la position stable décrite à la figure 14. Dans cette position, la dent 55 de la première portion de cliquet 53 est engagée avec la face frontale 65 de la dent de la roue dentée 52. Ainsi, la rotation du levier dans le sens "C" entraîne la roue dentée 52 dans le même sens. Cependant la réaction sur la face frontale 65 de dent de la roue dentée 52 a tendance à provoquer un basculement dans le sens inverse du cliquet double, à l'encontre de l'action du ressort fil 60 de la genouillère. Tant que le moment sur l'axe 58 de cette réaction est inférieur au moment de la précontrainte du ressort fil 60, il n'y a pas débrayage du dispositif. Le débrayage intervient lorsque le moment de la réaction sur la face frontale 65 dépasse le moment de la force de précontrainte. C'est la précontrainte du ressort fil 60 qui détermine le seuil du couple de déclenchement.

On remarquera que, dans cette configuration et dans le sens de serrage "C", la réaction frontale de la dent passe très près de l'axe 58 de rotation du cliquet (distance d1), ce qui permet d'avoir un niveau de déclenchement élevé. La distance d1 est déterminée comme étant la distance séparant l'axe 58 de la normale N1 à la surface de contact SC 1 entre le cliquet 51 et la roue dentée 52.

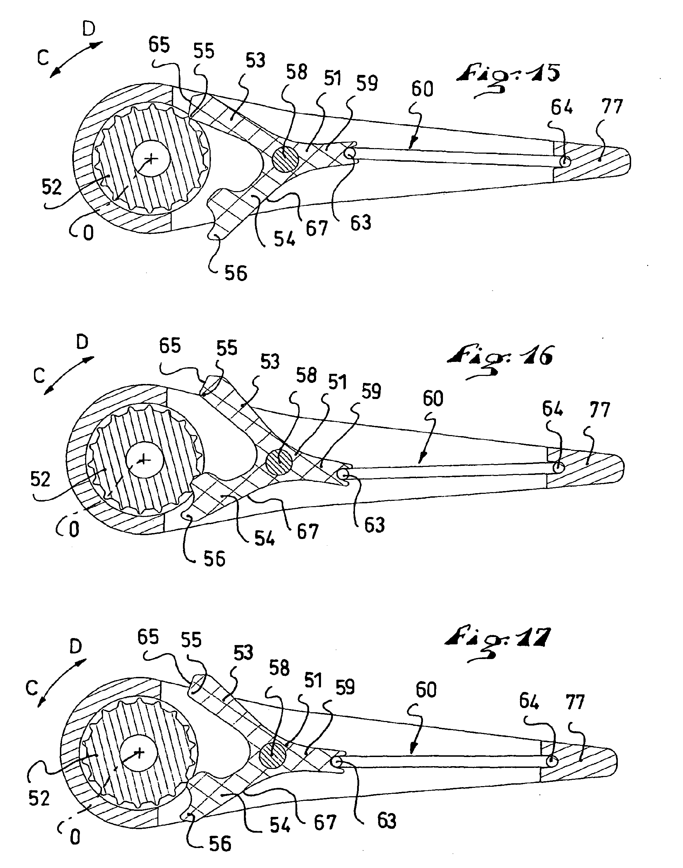

Au moment du déclenchement on se retrouve dans l'état instable représenté à la figure 15. La première portion du cliquet reste au contact de la roue dentée 52, mais il glisse à la surface de celle-ci. Par conséquent, dans cet état la rotation du levier, et celle du cliquet, n'entraîne pas de rotation de la roue dentée 52.

On peut noter que dans cet état, si l'utilisateur continue à appliquer le même effort pour faire tourner le levier 77, le phénomène décrit plus haut se répète, à savoir engagement du cliquet sur une dent de la roue dentée 52, puis glissement de celui-ci sur la roue dentée jusqu'à ce qu'il entre en contact avec la dent suivante. Cette succession d'engagement et de glissement engendre un bruit caractéristique "cliquetis" qui renseigne l'utilisateur que le couple de serrage maximal a été atteint.

Au cours du serrage, l'utilisateur peut faire usage du phénomène de "pompe" au cours duquel, tout en maintenant la première partie du cliquet 53 en position de serrage, c'est-à-dire au contact de la roue dentée 52, il fait pivoter le levier 77 dans le sens du desserrage "D". Lorsqu'il fait tourner le levier dans ce sens, la dent précédente de la roue dentée 52 va venir soulever la première partie du cliquet 53, à l'encontre du ressort fil 60. Dans cette confirmation de contact entre le cliquet et la roue dentée 52, la surface de contact SC2 est orientée bien autrement qu'elle ne l'était dans le sens du serrage et on peut noter que la distance d2, séparant la normale N2 à la surface de contact SC2 (au point de contact) de l'axe 58 est très supérieure à d1, si bien que l'effort nécessaire au débrayage dans le sens du desserrage est beaucoup plus faible. C'est bien entendu une condition importante pour permettre un phénomène de "pompage" et le fonctionnement du système comme une "roue libre" assurant transmission d'un couple à la roue dentée 52, uniquement dans la direction de serrage.

On peut encore améliorer cet effet de roue libre en prévoyant un cliquet secondaire précontraint qui remplacerait la première partie du cliquet 53.

La position de desserrage est visible sur la figure 16. Cette position est obtenue en faisant basculer le cliquet double autour de son point de rotation 58. Le basculement est obtenu en repoussant le cliquet, par exemple, en appuyant manuellement sur la surface d'appui 67 du cliquet. Le cliquet est ainsi mis en position de desserrage. La seconde portion de cliquet 54 est asymétrique, de la même manière que la première portion de cliquet. Du fait de l'engagement inversé de la seconde portion de cliquet 54 avec la roue, en opérant la rotation du cliquet dans le sens D, on obtient le blocage de la dent de la portion de cliquet sur la roue dentée et donc le dévissage du tirant par rapport à la roue dentée et, par conséquent, le desserrage du dispositif. De même, en opérant le cliquet dans le sens C, on obtient le frottement de la portion de cliquet sur la roue. De ce fait, en opérant alternativement dans le sens C et D, on obtient un effet de pompe au desserrage.

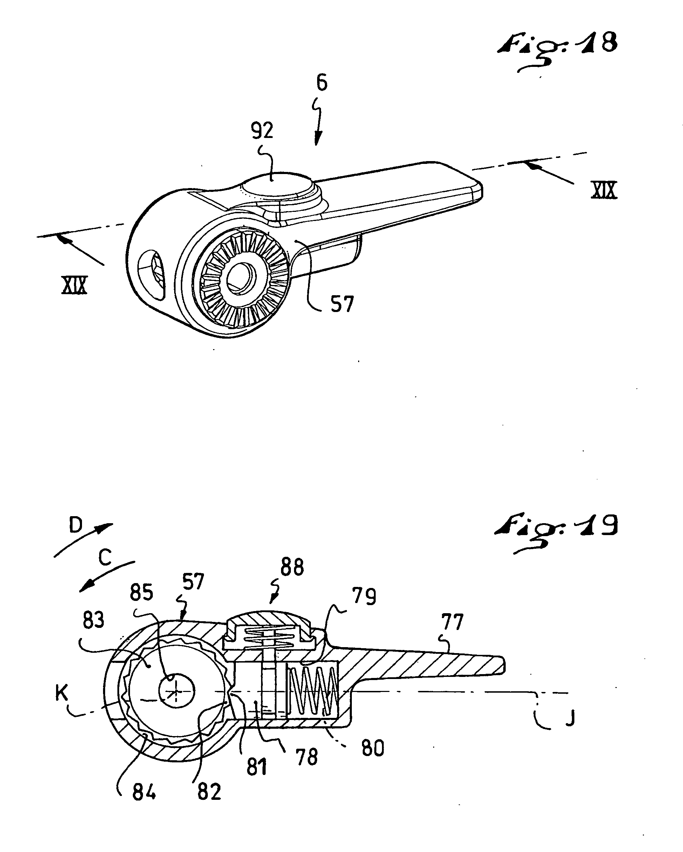

Les figures 18 à 20 montrent un cinquième mode de réalisation de l'invention. Dans ce cas, le système de serrage rapide 6 illustré comprend un corps 57 se prolongeant par un levier 77. Le système comprend un simple cliquet 78 à déplacement axial logé dans un logement cylindrique 79 ménagé à l'intérieur du corps 57 et une roue dentée 83 d'axe de rotation K. Le cliquet est mobile selon un axe J dans le logement perpendiculairement à l'axe K de la roue dentée. Un moyen de mise sous tension élastique tel qu'un ressort de compression 80 est disposé à l'arrière du logement pour maintenir le cliquet sous tension contre la roue dentée.

Le cliquet 78 possède une denture 81 qui coopère avec une la denture 82 d'une portion dentée une roue 83 laquelle est logée dans un second logement 84 d'axe transversal K. La roue 83 possède un alésage axial 85 dans lequel est ménagé un filetage (non représenté) pour recevoir l'extrémité vissée du tirant.

Les parties dentées 81, 82 du cliquet et de la roue en engrenage l'une avec l'autre sont, par exemple, dissymétriques de façon à opposer des forces de frottement plus importantes dans la direction C de serrage et favoriser le retour partiel du levier dans la direction inverse D afin de procurer l'effet avantageux de « pompage » lors du serrage. Comme dans les modes précédents, l'angle de la surface frontale 86 de la denture du cliquet est plus faible par rapport au plan axial que l'angle de la surface secondaire 87.

13

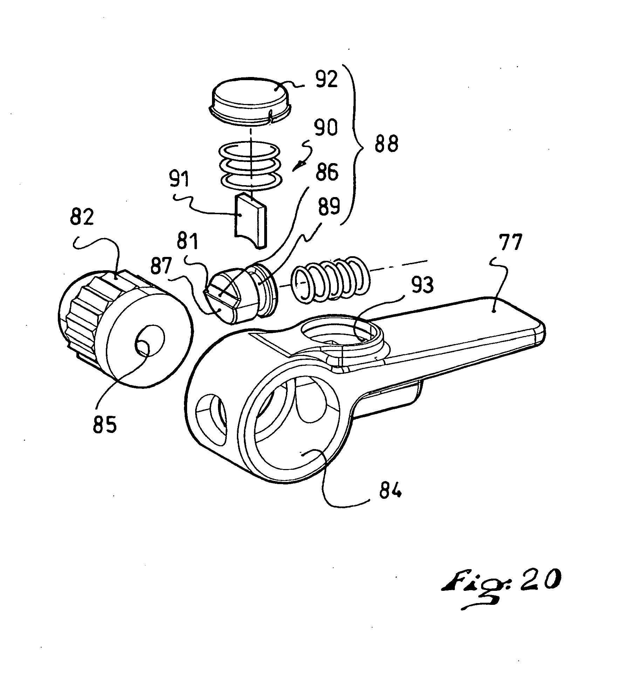

Comme le montre la figure 20 en mode éclaté, un moyen de verrouillage 88 du cliquet est prévu pour verrouiller le cliquet en mode de desserrage. Ce moyen de verrouillage comprend, d'une part, une gorge 89 ménagée dans le corps du cliquet et, d'autre part, un organe de verrouillage 90 mobile transversalement comprenant un verrou 91 et un bouton poussoir 92 monté au travers d'un logement transversal 93 du corps. Le bouton poussoir permet de déplacer le verrou 91 transversalement pour sélectivement bloquer le cliquet en position d'engagement avec la roue. Dans cette configuration, le ressort de compression n'est plus actif sur le cliquet. Le bouton poussoir peut être élastiquement mobile et lui-même verrouillable en position de verrouillage. Le moyen peut être déverrouillé en position haute de déverrouillage par une seconde poussée sur le bouton afin de libérer le cliquet et revenir dans le mode de serrage avec mise en compression du cliquet par le ressort de compression.

En mode de verrouillage par le moyen de verrouillage 88, il est ainsi possible d'activer le système de serrage rapide dans la direction de rotation D en obtenant un blocage du cliquet en configuration d'engrenage. Dans ce cas, le levier doit être déplacé en rotation sur plusieurs tours afin d'obtenir le desserrage. Dans ce cas, le système n'est pas à effet de « pompage » au desserrage. Seule l'opération de serrage procure l'effet du type à « pompe » avec retour angulaire partiel du levier sans desserrage.

Selon un avantage de l'invention, l'effort de serrage peut être mieux calibré. En particulier, l'effort de serrage peut être réglé à des valeurs normalement inférieures aux valeurs correspondantes à une action exagérée de serrage sur un dispositif de l'art antérieur. Autrement dit, le tirant du dispositif de blocage rapide sur lequel est monté le système de l'invention n'a pas nécessairement besoin d'être surdimensionné ou d'être fait dans un alliage métallique aux caractéristiques mécaniques trop élevées. Par exemple, le tirant peut être fait dans un alliage d'aluminium du type 7075, 7349 ou 7449 dont la résistance mécanique est inférieure ou égale à 700 Mpa, ayant au moins 4% de Zn et 2% de Cu. Dans les dispositifs de l'art antérieur, il est préférable de prévoir un tirant dont la résistance mécanique en traction est d'au moins 1000 Mpa comme, par exemple, un tirant fait dans un alliage TA6V. Un alliage de ce type présente l'inconvénient d'être beaucoup plus cher que les alliages d'aluminium précités et d'avoir une moins bonne usinabilité.

**Exemple :**

Le tableau suivant présente une comparaison des caractéristiques de différents types de tirants possibles pour le dispositif de l'invention, fabriqués en différents matériaux respectivement : en acier haute résistance (HR), acier standard, alliage de titane TA-6V, alliage d'aluminium 7075, alliage d'aluminium 7349 de plus haute résistance et alliage de magnésium.

Les valeurs sont données pour un tirant pouvant résister à une force en traction F maximale de 10000 Newton.

| F maxi | 10000 | | | | | |
|---|---|---|---|---|---|---|
| | Acier HR | Acier | TA-6V | 7075 | 7349 | MgAl8Zn |
| Rm | 1400 | 900 | 980 | 500 | 700 | 340 |
| densité | 7,8 | 7,8 | 4,55 | 2,8 | 2,8 | 1.8 |
| Rm/d | 179,49 | 115,38 | 215,38 | 178,57 | 250 | 188,89 |
| Section (mm$^2$) | 7,14 | 11,11 | 10,20 | 20 | 14,29 | 29,41 |
| diamètre (mm) | 3,02 | 3,76 | 3,60 | 5,05 | 4,26 | 6,12 |
| masse/m | 55,71 | 86,67 | 46,43 | 56 | 40 | 52,94 |
| masse / 7349 | 139% | 217% | 116% | 140% | 100% | 132% |
| | | | | | | |
| coüt/kg | 1 € | 1 € | 40 € | 6 € | 8 € | 15 € |
| Usinabilité | O | O | - | ++ | + | |

Il ressort du tableau que les alliages d'aluminium représentent un compromis avantageux en termes de poids faible, coût faible et bonne usinabilité. Bien entendu, les autres types de tirants peuvent être utilisés dans l'invention avec certains inconvénients toutefois en rapport avec le poids, le coût ou l'usinabilité par rapport aux alliages à base d'aluminium.

Le tableau est rempli à titre d'exemple pour un effort de traction de 10000 N. On peut noter que pour effectuer un serrage de la roue un effort de traction dans le tirant de 6000 N peut être suffisant. Il est cependant nécessaire de prendre un coefficient de sécurité pour tenir compte des dispersions, notamment des dispersions liées aux frottements.

Le moyeu 3 est traversé de part en part d'un tunnel prévu pour le passage du tirant 4. Le tirant 4 a une forme générale cylindrique complétée par une portion de forme hexagonale. L'ouverture du tunnel ménagé dans le moyeu 3 a une section de forme hexagonale complémentaire de celle de la portion de tirant 4.

On notera que la forme hexagonale n'est qu'une possibilité parmi d'autres formes polygonale ou autre. Par exemple un simple méplat pourra faire office de moyens de reprise des efforts de torsion.

Avantageusement, grâce aux moyens de reprise des efforts de torsion, lesquels sont placés à proximité du sous-assemblage d'actionnement (SEA), le tirant 4 n'a pas à être dimensionné de façon à résister, sur toute sa longueur, aux efforts de torsion générés lors de l'actionnement du SEA.

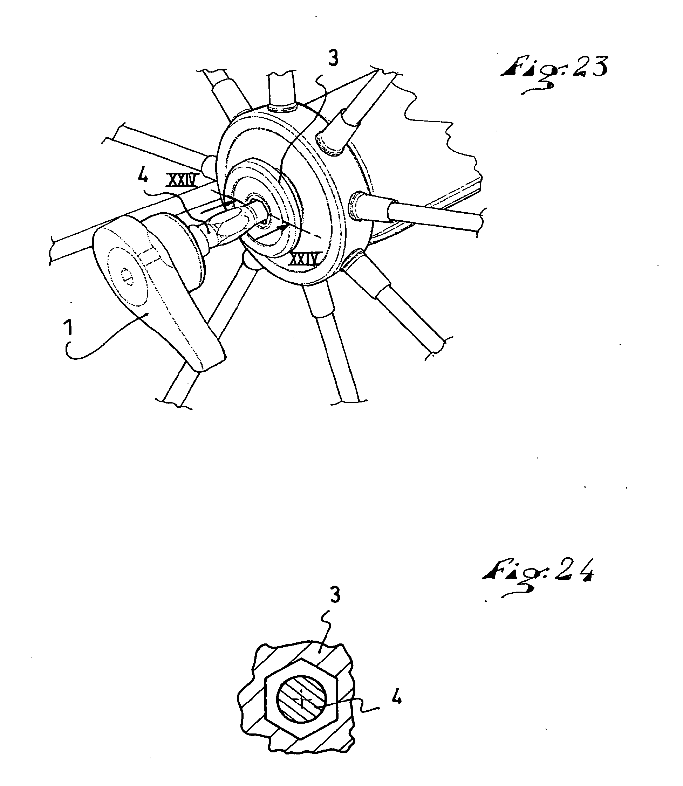

Dans un autre mode de réalisation de l'invention, le tirant possède une forme générale cylindrique complétée par une portion de forme polygonale, par exemple hexagonale. Ce mode de réalisation est illustré aux figures 23 et 24.

La figure 23 montre en perspective le moyeu 3 d'une roue de bicyclette ainsi que le dispositif de serrage rapide 1 avant que ce dernier soit complètement inséré dans le moyeu.

Le dispositif de serrage rapide est un dispositif conforme au mode de réalisation décrit aux figures 1 à 7. Bien entendu ce choix n'est pas limitatif et tout dispositif de serrage rapide utilisant le principe de vis / écrou pourra être amélioré par l'utilisation de cette réalisation de l'invention.


**Revendications**

1. Système de serrage rapide (6) pour dispositif de serrage rapide, en particulier pour cycle, du type comprenant un tirant (4) s'étendant dans une direction axiale et un élément d'appui terminal (7) monté sur une première extrémité de l'axe destiné à prendre appui sur une première surface de serrage d'un cycle ;
ledit système de serrage rapide (6) comprenant un sous-ensemble de serrage (SES) comprenant une surface d'appui (11) et un sous-assemblage d'actionnement (SEA) comprenant un moyen d'actionnement mobile (37, 77), apte en rotation axiale autour dudit tirant (4) et configuré pour transmettre un couple de serrage au sous-ensemble de serrage (SES) lors du serrage du dispositif,
**caractérisé en ce qu'**il comprend des moyens de limitation du couple de serrage permettant de limiter le couple transmis par le sous-ensemble d'actionnement (SEA) au sous-ensemble de serrage (SES), lesdits moyens de limitation du couple de serrage formant une interface de connexion débrayable (13, 21, 51, 52, 53, 54, 70, 78, 83) qui limite le couple transmis par le sous-ensemble d'actionnement (SEA) au sous-ensemble de serrage à partir d'une valeur limite du couple ou d'une plage de couples de serrage prédéfinie.

2. Système selon la revendication 1, **caractérisé en ce que** des moyens de montage du système sur le tirant (4) du dispositif sont prévus, comprenant une portion filetée du sous-ensemble de serrage configurée pour s'engager au vissage sur l'extrémité (8a) du tirant (4).

3. Système selon la revendication 2, **caractérisé en ce que** l'interface de connexion débrayable est formée par un engagement de deux portions de frottement (13, 21, 22, 23, 51, 52, 53, 54, 55, 56, 70, 71, 72, 73, 74, 78, 81, 82, 83, 86, 87) en contact l'une de l'autre qui se désengagent à partir d'une valeur limite du couple ou d'une plage de couples de serrage prédéfinie, les deux portions de frottement se désengageant à l'encontre d'un moyen de mise sous tension élastique (26, 60, 80) qui applique un effort élastique du sous-ensemble d'actionnement (SEA) contre le sous-ensemble de serrage (SES).

4. Système selon la revendication 3, **caractérisé en ce que** les deux portions de frottement de l'interface de connexion débrayable comprennent des portions dentées (22, 23, 52, 55, 56, 70, 71, 72, 73, 81, 82, 83) qui s'engagent mutuellement.

5. Système selon les revendications 3 ou 4, **caractérisé en ce que** le moyen de mise sous tension élastique (26) est configuré pour appliquer un effort axial du sous-ensemble d'actionnement (SEA) contre le sous-ensemble de serrage (SES) de façon à ce que l'interface de connexion débrayable se désengage par un déplacement axial relatif entre les portions de frottement (22, 23) et à l'encontre de la tension du moyen de mise sous tension élastique (26).

6. Système selon la revendication 5, **caractérisé en ce que** la portion dentée motrice de l'interface de connexion débrayable est formée par un rochet (21) comprenant une couronne dentée (22) et **en ce que** le moyen de mise sous tension élastique (26) est positionné dans une cavité (39) entre le moyen d'actionnement (37) et le rochet (21).

7. Système selon l'une quelconque des revendications 1 à 3, **caractérisé en ce que** l'interface de connexion débrayable est formée par au moins un cliquet (51, 78) agissant sur au moins une portion dentée (52, 70, 71, 83).

**8.** Système selon la revendication 7, **caractérisé en ce que** le cliquet (51, 78) ou la portion dentée (52, 70, 71, 83) possède un profil de dent asymétrique configuré pour procurer un « effet de pompage » au moins dans la position de serrage.

**9.** Système selon la revendication 8, **caractérisé en ce que** le cliquet (51) est mobile en basculement, de préférence en rotation selon un axe de rotation axial (58), par rapport à la portion dentée (52, 70, 71), **en ce que** le cliquet (51) forme avec le moyen élastique (60) de mise sous tension une genouillère pour le passage entre une position stable de serrage et une position stable de desserrage et **en ce que** le cliquet comprend deux portions de cliquet (53, 54) opposées configurées pour s'engager alternativement avec au moins une roue dentée (52, 70, 71).

**10.** Système selon l'une quelconque des revendications 7 à 9, **caractérisé en ce que** le cliquet (78) est mobile axialement dans un logement (79) du corps du système de serrage rapide.

**11.** Système selon la revendication 10, **caractérisé en ce que** le cliquet (78) est verrouillable par un moyen de verrouillage (88) en mode de desserrage.

**12.** Système selon l'une des revendications 1 à 11, **caractérisé en ce qu'**il comprend une interface (41) de différentiel des frottements entre les modes de serrage et de desserrage configurée pour favoriser le glissement entre un moyen d'appui (14) et des moyens de serrage (20) dans le sens du serrage (C) et la génération de frottement entre ledit moyen d'appui (14) et lesdits moyens de serrage (13, 20) dans le sens (D) du desserrage.

**13.** Système selon la revendication 12, **caractérisé en ce que** le sous-ensemble de serrage comprend un arbre muni d'un alésage fileté apte à être engagé sur la partie filetée du tirant et **en ce que** la partie filetée du tirant et celle de l'alésage possèdent un pas supérieur à 1,5 mm.

**14.** Système selon l'une des revendications 12 ou 13, **caractérisé en ce que** l'interface (41) comprend un moyen de roue libre et **en ce que** l'interface (41) comprend au moins des moyens de retenue sélectif (43) comprenant une bague roue libre de glissement (45) comprenant des bords de retenue (48) coopérant avec un crantage (46), des moyens de serrage (13, 20), ladite bague de roue libre comprenant des ailettes radiales (44) avec des bords relevés et ladite interface comprenant en plus une rondelle configurée pour promouvoir le glissement entre la bague roue libre et les moyens de serrage (13, 20).

**15.** Système selon l'une des revendications 1 à 14, **caractérisé en ce qu'**il comprend en outre des moyens de reprise des efforts de torsion.

**16.** Système selon la revendication 15, **caractérisé en ce que** lesdits moyens de reprise des efforts de torsion comprenant une forme polygonale ménagée sur le tirant (4) à proximité du sous-ensemble de serrage (SES).

**17.** Dispositif de blocage rapide (1) comprenant un axe ou tirant (4) s'étendant dans une direction axiale (I), un élément d'appui terminal (7) monté sur une première extrémité (8b) du tirant **caractérisé en ce qu'**il comprend un système (6) selon l'une quelconque des revendications 1 à 16 monté sur la deuxième extrémité (8a) du tirant.

**18.** Dispositif selon la revendication 17, **caractérisé en ce que** le matériau du tirant possède une résistance mécanique à la traction comprise entre 450 et 950 Mpa.

**19.** Roue comprenant une jante, un moyeu (3), des moyens de raccordement de la jante au moyeu, par exemple des nappes de rayons et/ou des voiles plein, **caractérisé en ce qu'**elle comprend au moins un système de blocage rapide (1) selon l'une quelconque des revendications 17 ou 18.

**20.** Roue selon la revendication 19, **caractérisée en ce qu'**une forme polygonale est ménagée sur le tirant (4) à proximité du sous-ensemble de serrage (SES), et **en ce que** le moyeu (3) comprend une forme réceptive complémentaire de ladite forme polygonale.

**Claims**

**1.** Quick-release system (6) for a quick-release device, in particular for a cycle, of the type including a skewer (4) extending in an axial direction and an end support element (7) mounted on a first end of the skewer adapted to be supported on a first tightening surface of a cycle;

said quick-release system (6) comprising a tightening sub-assembly (SES) including a support surface (11) and an actuation sub-assembly (SEA) including a movable actuating mechanism (37, 77), capable of axial rotation around said skewer (4) and configured to transmit a tightening torque to the tightening sub-assembly (SES) when the device is being tightened,

**characterized in that** it includes a tightening torque limiting mechanism to limit torque transmitted by the actuation sub-assembly (SEA) to the tightening sub-assembly (SES), said tightening torque limiting mechanism forming a disengageable connection interface (13, 21, 51, 52, 53, 54, 70, 78, 83) to limit torque transmitted by the actuation sub-assembly (SEA) to the tightening sub-assembly, from a limiting value of the torque or from a predefined range of tightening torque values.

2. System according to claim 1, **characterized in that** a mechanism for mounting the system on the skewer (4) of the device is provided, including a threaded portion of the tightening sub-assembly configured to engage the end (8a) of the skewer (4) via a threaded connection..

3. System according to claim 2, **characterized in that** the disengageable connection interface is formed by engagement of two friction portions (13, 21, 22, 23, 51, 52, 53, 54, 55, 56, 70, 71, 72, 73, 74, 78, 81, 82, 83, 86, 87) in contact with one another, disengagement of said friction portions beginning from a limiting torque value or from a predefined range of tightening torque values, the two friction portions disengaging against an elastic tensioning mechanism (26, 60, 80) which applies an elastic force of the actuation sub-assembly (SEA) against the tightening sub-assembly (SES).

4. System according to claim 3, **characterized in that** the two friction portions of the disengageable connection interface include mutually engageable toothed portions (22, 23, 52, 55, 56, 70, 71, 72, 73, 81, 82, 83).

5. System according to claims 3 or 4, **characterized in that** the elastic tensioning mechanism (26) is configured to apply an axial force of the actuation sub-assembly (SEA) against the tightening sub-assembly (SES), so that the disengageable connection interface disengages via of a relative axial displacement between the friction portions (22, 23) and against tension of the elastic tensioning mechanism (26).

6. System according to claim 5, **characterized in that** the driving toothed portion of the disengageable connection interface is formed by a ratchet (21) including a ring gear (22), and **in that** the elastic tensioning mechanism (26) is positioned in a cavity (39) between the actuating mechanism (37) and the ratchet (21).

7. System according to any of claims 1 to 3, **characterized in that** the disengageable connection interface is formed by at least one pawl (51, 78) acting on at least one toothed portion (52, 70, 71, 83).

8. System according to claim 7, **characterized in that** the pawl (51, 78) or the toothed portion (52, 70, 71, 83) have an asymmetrical tooth profile configured to provide a "pumping" effect at least in the tightening position.

9. System according to claim 8, **characterized in that** the pawl (51) is rockingly movable, preferably in rotation along an axial rotational axis (58), relative to the toothed portion (52, 70, 71), **in that** the pawl (51) and the elastic tensioning mechanism (60) form a knuckle joint for switching between a stable tightening position and a stable loosening position, and **in that** the pawl includes two opposite pawl portions (53, 54) configured to alternatively engage at least one toothed wheel (52, 70, 71).

10. System according to any of claims 7 to 9, **characterized in that** the pawl (78) is axially movable in a housing (79) of the body of the quick-release system.

11. System according to claim 10, **characterized in that** the pawl (78) is lockable by a locking mechanism (88) in a loosening mode.

12. System according to any of claims 1 to 11, **characterized in that** it includes an interface (41) for friction differential between the tightening and loosening modes, configured to promote slip between a support mechanism (14) and a tightening mechanism (20) in a tightening direction (C), and the generation of friction between said support mechanism (14) and said tightening mechanism (13, 20) in a loosening direction (D).

13. System according to claim 12, **characterized in that** the tightening subassembly includes a shaft provided with a threaded bore capable of engaging the threaded portion of the skewer, and **in that** the threaded portion of the skewer and the threaded portion of the bore have a pitch greater than 1.5 mm.

14. System according to one of claims 12 or 13, **characterized in that** the interface (41) includes a freewheel mechanism, and **in that** the interface (41) includes at least a selective retention mechanism (43) including a freewheel slip ring (45) having retaining edges (48) that cooperate with notches (46), a tightening mechanism (13, 20), said freewheel ring including radial blades (44) with raised edges, and said interface further including a washer that is configured to promote slip between the freewheel ring and the tightening mechanism (13, 20).

15. System according to any of claims 1 to 14, **characterized in that** it further includes a mechanism for recovering the torsional forces.

16. System according to claim 15, **characterized in that** said mechanism for recovering the torsional forces include a polygonal-shaped portion arranged on the skewer (4), in a vicinity of the tightening subassembly (SES).

17. Quick-release device (1) comprising an axle or skewer (4) extending in an axial direction (I), and an end support element (7) mounted on a first end (8b) of the skewer, **characterized in that** it includes a system (6) according to any of claims 1 to 16, mounted on the second end (8a) of the skewer.

18. Device according to claim 17, **characterized in that** the skewer is made of a material having a mechanical resistance to traction ranging between 450 and 950 Mpa.

19. Wheel comprising a rim, a hub (3), an arrangement to connect the rim to the hub, for example spoke sets and/or solid wheel body, **characterized in that** it includes at least one quick-release system (1) according to any of claims 17 or 18.

20. System according to claim 19, **characterized in that** a polygonal-shape portion is arranged on the skewer (4), in a vicinity of the tightening subassembly (SES), and **in that** the hub (3) includes a complementary-shaped portion for receiving said polygonal-shaped portion.

**Patentansprüche**

1. Schnellspannsystem (6) für eine Schnellspannvorrichtung, insbesondere für ein Fahrrad, von der Art einen Stehbolzen (4) umfassend, welcher sich in einer axialen Richtung erstreckt und ein Endanschlagelement (7), welches an dem ersten Ende der Achse befestigt ist, dazu bestimmt, um auf einer ersten Spannoberfläche eines Fahrrads in Anschlag zu kommen;
wobei das Schnellspannsystem (6) eine Spannuntergesamtheit (SES) umfasst, welche eine Anschlagoberfläche (11) und eine Unterbaugruppe zum Betätigen (SEA) umfasst, welche ein mobiles Betätigungsmittel (37, 77) umfasst, das sich um den Stehbolzen (4) drehen kann und konfiguriert ist um ein Spannmoment auf die Spannuntergesamtheit (SES) beim Spannen der Vorrichtung zu übertragen,
**dadurch gekennzeichnet, dass** es Begrenzungsmittel des Spannmoments umfasst, welche es ermöglichen, das Moment, welches durch die Untergesamtheit zum Betätigen (SEA) zu der Spannuntergesamtheit (SES) übertragen wird, zu begrenzen, wobei die Begrenzungsmittel des Spannmoments eine loskoppelbare Verbindungsschnittstelle (13, 21, 51, 52, 53, 54, 70, 78, 83) bilden, welche das Moment begrenzen, welches durch die Untergesamtheit zum Betätigen (SEA) zu der Spannuntergesamtheit ausgehend von einem begrenzten Wert des Moments oder einem vordefinierten Bereich von Spannmomenten übertragen wird.

2. System nach Anspruch 1, **dadurch gekennzeichnet, dass** die Montagemittel des Systems auf dem Stehbolzen (4) der Vorrichtung vorgesehen sind, welche einen Abschnitt mit Gewinde der Spannuntergesamtheit umfasst, welcher konfiguriert ist, um beim Schrauben auf dem Ende (8a) des Stehbolzens (4) einzugreifen.

3. System nach Anspruch 2, **dadurch gekennzeichnet, dass** die loskoppelbare Verbindungsschnittstelle durch ein Eingreifen von zwei Reibungsabschnitten (13, 21, 22, 23, 51, 52, 53, 54, 55, 56, 70, 71, 72, 73, 74, 78, 81, 82, 83, 86, 87) gebildet wird, welche miteinander in Kontakt sind, und welche sich ab einem Grenzwert des Moments oder einem vordefinierten Spannmomentbereich lösen, wobei die zwei Reibeabschnitte sich gegen ein elastisches Spannmittel (26, 60, 80) lösen, welches eine elastische Kraft der Untergesamtheit zur Betätigung (SEA) gegen die Spannuntergesamtheit (SES) ausübt.

4.  System nach Anspruch 3, **dadurch gekennzeichnet, dass** die Reibeabschnitte der loskoppelbaren Verbindungsschnittstelle gezahnte Abschnitte (22, 23, 52, 55, 56, 70, 71, 72, 73, 81, 82, 83) umfassen, welche gegenseitig ineinander eingreifen.

5.  System nach den Ansprüchen 3 oder 4, **dadurch gekennzeichnet, dass** das elastische Spannmittel (26) konfiguriert ist, um eine axiale Kraft der Untergesamtheit zur Betätigung (SEA) gegen die Spannuntergesamtheit (SES) in der Weise aufzubringen, dass die loskoppelbare Verbindungsschnittstelle sich durch eine relative axiale Verschiebung zwischen den Reibeabsclnitten (22, 23) und gegen die Spannung des elastischen Spannmittels (26) löst.

6.  System nach Anspruch 5, **dadurch gekennzeichnet, dass** der gezahnte Antriebsabschnitt der loskoppelbaren Verbindungsschnittstelle durch eine Ratsche (21) gebildet wird, welche eine gezahnte Krone (22) aufweist und **dadurch**, dass das elastische Spannmittel (26) in einem Hohlraum (39) zwischen dem Betätigungsmittel (37) und der Ratsche (21) positioniert ist.

7.  System nach einem der Ansprüche 1 bis 3, **dadurch gekennzeichnet, dass** die loskoppelbare Verbindungsschnittstelle durch zumindest ein Klickverschluss (51, 78) gebildet wird, welcher auf zumindest einen gezahnten Abschnitt (52, 70, 71, 83) einwirkt.

8.  System nach Anspruch 7, **dadurch gekennzeichnet, dass** der Klickverschluss (51, 78) oder der gezahnte Abschnitt (52, 70, 71, 83) ein asymmetrisches Zahnprofil aufweist, welcher konfiguriert ist, um ein "Pumpeffekt" zumindest in der Spannposition zu liefern.

9.  System nach Anspruch 8, **dadurch gekennzeichnet, dass** der Klickverschluss (51) beweglich schwenkbar ist, vorzugsweise in Drehrichtung gemäß einer axialen Drehachse (58) in Bezug auf den gezahnten Abschnitt (52, 70, 71), **dadurch** dass der Klickverschluss (51) mit dem elastischen Mittel (60) zum Spannen einen Kniehebel für das Hindurchgehen zwischen einer stabilen Spannposition und einer stabilen Lösposition bildet und **dadurch**, dass der Klickverschluss zwei Klickabschnitte (53, 54) umfasst, welche gegenüber liegen, und konfiguriert sind, um abwechselnd mit zumindest einem gezahnten Rad (52, 70, 71) einzugreifen.

10. System nach einem der Ansprüche 7 bis 9, **dadurch gekennzeichnet, dass** der Klickverschluss (78) in einer Aufnahme (79) des Körpers des Schnellspannsystems axial beweglich ist.

11. System nach Anspruch 10, **dadurch gekennzeichnet, dass** der Klickverschluss (78) durch ein Blockiermittel (88) im losgelösten Modus blockierbar ist.

12. System nach einem der Ansprüche 1 bis 11, **dadurch gekennzeichnet, dass** es eine Differenzialschnittstelle (41) der Reibung zwischen den im Spannmodus und dem Loslösmodus umfasst, um das Gleiten zwischen einem Anschlagmittel (14) und Spannmitteln (20) in der Spannrichtung (10) und das Erzeugen von Reibung zwischen dem Anschlagmittel (14) und den Spannmitteln (13, 20) in der Lösrichtung (D) zu begünstigen.

13. System nach Anspruch 12, **dadurch gekennzeichnet, dass** die Spannuntergesamtheit eine Welle umfasst, welche mit einer Bohrung mit Gewinde versehen ist, geeignet um mit dem Abschnitt mit Gewinde des Stehbolzens einzugreifen und **dadurch**, dass der Abschnitt mit Gewinde des Stehbolzens und jener der Bohrung einen Schritt von größer als 1,5 mm besitzen.

14. System nach Anspruch 12 oder 13, **dadurch gekennzeichnet, dass** die Schnittstelle (41) ein freies Radmittel umfasst und dass die Schnittstelle (41) zumindest Mittel zum selektiven Halten (43) umfasst, welche ein freies Ringgleitrad (45) umfassen, welches Halteränder (48) aufweist, die mit einer Rastung (46) zusammenwirken, Spannmittel (13, 20), wobei das freie Ringrad radiale Flügelchen (44) mit erhobenen Rändern umfasst, und die Schnittstelle außerdem eine Scheibe umfasst, welche konfiguriert ist, um das Gleiten zwischen dem freien Ringrad und den Spannmitteln (13, 20) zu fördern.

15. System nach einem der Ansprüche 1 bis 14, **dadurch gekennzeichnet, dass** es außerdem Mittel zur Wiederaufnahme der Torsionskräfte umfasst.

16. System nach Anspruch 15, **dadurch gekennzeichnet, dass** die Mittel zur Wiederaufnahme der Torsionskräfte eine polygonale Form umfassen, welche auf dem Hohlbolzen (4) benachbart zu der Spamuntergesamtheit (SES) angeordnet wird.

**17.** Vorrichtung zum schnellen Blockieren (1), welche eine Axe oder ein Stehbolzen (4) umfasst, welche sich in einer Axialrichtung (I) erstrecken, ein abschließendes Anschlagselement (7), welches auf ein erstes Ende (8b) des Stehbolzens montiert ist, **dadurch gekennzeichnet, dass** es ein System (6) gemäß einem der Ansprüche 1 bis 16 umfasst, welches auf ein zweites Ende (8a) des Stehbolzens montiert ist.

**18.** Vorrichtung nach Anspruch 17, **dadurch gekennzeichnet, dass** das Material des Stehbolzens eine mechanische Zugfestigkeit zwischen 450 und 950 MPa aufweist.

**19.** Rad, welches eine Felge, eine Nabe (3), Verbindungsmittel der Felge mit der Nabe, z. B. Speichentücher und/oder volle Umhüllungen, aufweist, **dadurch gekennzeichnet, dass** es zumindest ein Schnellspannsystem (1) gemäß einem der Ansprüche 17 oder 18 umfasst.

**20.** Rad nach Anspruch 19, **dadurch gekennzeichnet, dass** eine polygonale Form auf dem Stehbolzen (4) benachbart zu der Spannuntergesamtheit (SES) angeordnet ist, und dass die Nabe (3) eine ergänzende komplementäre Form der polygonalen Form umfasst.

*Fig. 1*

*Fig. 2*

Fig. 3

Fig. 4

*Fig. 5*

*Fig. 5b*

*Fig. 5a*

Fig. 6

Fig. 7

*Fig. 8*

*Fig. 9*

48

45

44

*fig. 11*

46

50

41

20

43

14

*Fig. 10*

Fig. 12

Fig. 13

Fig. 14

D

C

65  55  53  58  51  59  60  64  77

52

O  56  54  67  63

*Fig. 15*

D

C

65  55  53  58  51  59  60  64  77

52

O  56  54  67  63

*Fig. 16*

D

C

65  55  53  58  51  59  60  64  77

52

O  56  54  67  63

*Fig. 17*

*Fig. 18*

*Fig. 19*

*Fig. 20*

*Fig. 21*

*Fig. 22*

EP 2 070 725 B1

*Fig.23*

3

4 XXIV

XXIV

1

*Fig.24*

3

4

35

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070154286 A
- US 5447362 A
- US 2007145814 A